# EUROPEAN PATENT APPLICATION

(11) **EP 4 650 920 A1**
(43) Date of publication of application: **19.11.2025**
(21) Application number: 24822325.7
(22) Date of filing: 19.03.2024
(51) Int. Cl.: G06F 3/041

(54) **DISPLAY CONTROL METHOD AND RELATED DEVICE**

(30) Priority: 12.06.2023 CN 202310696576
(71) Applicant: Honor Device Co., Ltd., Shenzhen, Guangdong 518040 (CN)
(72) Inventor: CHENG, Long, Shenzhen, Guangdong 518040 (CN); CAI, Lifeng, Shenzhen, Guangdong 518040 (CN); CHEN, Jie, Shenzhen, Guangdong 518040 (CN)
(74) Representative: Gill Jennings & Every LLP
(86) International application number: PCT/CN2024/082486
(87) International publication number: WO 2024/255368

(57) **Abstract**

This application provides a display control method and a related device, and relates to the field of terminal technologies. The display control method includes: starting a first application in response to a first operation of a user; and in response to a second operation performed by the user on the first application, obtaining touch point coordinates and a touch event of the second operation based on a touch sampling rate of an electronic device; generating a first vertical synchronization signal based on a screen refresh rate of the electronic device, and generating a second vertical synchronization signal based on the touch event; and performing drawing and rendering of an image frame to be refreshed and displayed in response to the first vertical synchronization signal or the second vertical synchronization signal when the second operation reaches a sliding response threshold of the first application. According to the foregoing method, by increasing a generation frequency of a vertical synchronization signal, image drawing and rendering can be performed as soon as a user sliding operation reaches a sliding response threshold, thereby shortening a touch delay time and improving finger tracking performance of the electronic device.

## Description

This application claims priority to Chinese Patent Application No. 202310696576.5, filed with the China National Intellectual Property Administration on June 12, 2023 and entitled "DISPLAY CONTROL METHOD AND RELATED DEVICE", which is incorporated herein by reference in its entirety.

### TECHNICAL FIELD

Embodiments of this application relate to the field of terminal technologies, and in particular, to a display control method and a related device.

### BACKGROUND

A touch panel (Touch Panel, TP) is widely used in various electronic devices, and a user may implement human-computer interaction with an electronic device through a touch panel. As users have higher requirements for human-computer interaction performance of electronic devices, finger tracking performance has become an important indicator affecting the interactive operation performance of electronic devices. The finger tracking performance may also be referred to as a touch delay, and may reflect a speed at which a screen interface responds according to a touch operation performed by a user on a touch panel. A higher response speed indicates a shorter touch delay time and better finger tracking performance. A lower response speed indicates a longer touch delay time and worse finger tracking performance. A relatively long touch delay time significantly affects device use experience of the user. How to effectively shorten the touch delay time and improve finger tracking performance of the electronic device is an inevitable problem for the electronic device that supports touch operations.

### SUMMARY

In view of the above, it is necessary to provide a display control method, to shorten a touch delay time of an electronic device and improve finger tracking performance of the electronic device.

According to a first aspect, this application provides a display control method, applied to an electronic device. The method includes: receiving a first operation of a user; starting a first application in response to the first operation; receiving a second operation of the user for the first application, where the second operation includes a sliding operation; obtaining touch point coordinates and a touch event of the second operation based on a touch sampling rate of the electronic device in response to the second operation; generating a first vertical synchronization signal based on a screen refresh rate of the electronic device, and generating a second vertical synchronization signal based on the touch event, where a frequency of generating the second vertical synchronization signal based on the touch event request is equal to the touch sampling rate; and performing drawing and rendering of an image frame to be refreshed and displayed in response to either of the first vertical synchronization signal and the second vertical synchronization signal when the second operation reaches a sliding response threshold of the first application.

According to the foregoing technical solution, the electronic device generates vertical synchronization signals in two manners. In an existing manner, a vertical synchronization signal is generated based on the screen refresh rate; and in another manner, a vertical synchronization signal is generated based on the touch event. That is, by increasing a frequency of generating a vertical synchronization signal, a quantity of times of determining whether a sliding operation reaches a sliding response threshold can be increased. Compared with an existing sliding touch solution, whether a sliding operation reaches a sliding response threshold can be determined in advance, so that an application thread of an application can draw and render an image as soon as possible when a sliding operation of the user reaches a sliding response threshold, thereby shortening a delay time of the electronic device and improving finger tracking performance of the electronic device.

In a possible implementation, the performing drawing and rendering of an image frame to be refreshed and displayed in response to either of the first vertical synchronization signal and the second vertical synchronization signal when the second operation reaches a sliding response threshold of the first application includes: in response to either of the first vertical synchronization signal and the second vertical synchronization signal, determining, based on the obtained touch point coordinates, whether the second operation reaches the sliding response threshold of the first application; and performing drawing and rendering of the image frame to be refreshed and displayed when the second operation reaches the sliding response threshold of the first application.

According to the foregoing technical solution, a sliding response threshold is set for an application, so as to avoid an update of an application interface caused by unintentionally touching the application interface by a user. An application thread of the application may determine, in response to a vertical synchronization signal, whether a sliding operation reaches the sliding response threshold. By increasing a frequency of generating a vertical synchronization signal, a quantity of times of determining whether the sliding operation reaches the sliding response threshold is increased, so that the application thread of the application can draw and render an image as soon as possible when the sliding operation of the user reaches the sliding response threshold, thereby reducing a touch delay of the electronic device, and improving finger tracking performance of the electronic device.

In a possible implementation, the touch event includes a first down event (DOWN event), a move event (MOVE event), and an up event (UP event), and the generating a second vertical synchronization signal based on the touch event includes: generating the second vertical synchronization signal based on the MOVE event.

According to the foregoing technical solution, the touch event of the second operation may include a DOWN event, several MOVE events, and an UP event. The DOWN event refers to a pressing event generated when the user starts to touch the screen, and is generally used to start a new operation or gesture. The MOVE event refers to a moving event generated when the user moves a finger on the screen, and may be used to track a moving track of the finger, implement a drag or slide function. The UP event refers to a release event generated when the user lifts the finger, and is generally used to complete an operation or gesture. Because the solution of this application relates to improving finger tracking performance of a sliding operation, the user starts to slide only at a moment at which the DOWN event is received, and apparently the sliding response threshold of the application cannot be reached. There is no need to request to generate an additional vertical synchronization signal based on the DOWN event. The UP event represents an end of the user slide. Additional generation of a second vertical synchronization signal is requested based on the UP event, and a generation opportunity is relatively late. Therefore, it is impossible to determine in advance whether the sliding operation reaches the sliding response threshold. However, by requesting to generate an additional vertical synchronization signal based on the MOVE event, it is possible to determine in advance whether the sliding operation reaches the sliding response threshold, thereby shortening a touch delay time of the electronic device and improving finger tracking performance of the electronic device.

In a possible implementation, the generating the second vertical synchronization signal based on the MOVE event includes: recording a quantity of MOVE events; and when the quantity of MOVE events is greater than a first preset value, generating the second vertical synchronization signal based on the MOVE event, where the first preset value is set based on the sliding response threshold of the first application.

According to the foregoing technical solution, after the DOWN event is received, MOVE events are counted, and in a case in which a quantity of MOVE events is greater than a first preset value, a second vertical synchronization signal is generated based on a MOVE event request, so as to attempt to add a vertical synchronization signal in response to a MOVE event that actually may reach the sliding response threshold. This avoids adding too many meaningless vertical synchronization signals, and prevents an abnormal sliding scenario from triggering adding of a vertical synchronization signal multiple times. For example, for an unintentional touch on the display screen, because a sliding distance of the unintentional touch is limited, a quantity of MOVE events, that is, a first preset value, cannot be reached generally. In other words, the electronic device does not attempt to add a vertical synchronization signal, thereby avoiding an abnormality of frequent attempts to add a vertical synchronization signal due to an unintentional touch, affecting a working rhythm of a synthesis thread (SurfaceFlinger thread), and causing an insignificant increase in application thread load.

In a possible implementation, the generating the second vertical synchronization signal based on the MOVE event includes: generating the second vertical synchronization signal based on the MOVE event when a vertical synchronization signal adding function is in an enabled state.

According to the foregoing technical solution, the vertical synchronization signal adding function is enabled, which may cause a load increase to the application to a specific extent, and consequently, power consumption of the electronic device increases. The user of the electronic device may choose, according to an actual requirement, to enable or disable the vertical synchronization signal adding function. For example, in a case in which the vertical synchronization signal adding function is in an enabled state, the electronic device may additionally generate a vertical synchronization signal based on a MOVE event by adding a "Vertical synchronization signal adding function" icon to a setting interface.

In a possible implementation, the generating the second vertical synchronization signal based on the MOVE event when a vertical synchronization signal adding function is in an enabled state includes: generating the second vertical synchronization signal based on the MOVE event when the vertical synchronization signal adding function is in the enabled state and the first application is a preset application.

According to the foregoing technical solution, because the vertical synchronization signal adding function is enabled, a load increase is caused to a specific extent to the application, which causes an increase in power consumption of the electronic device. It may be set that the solution takes effect only in a scenario in which there is a specific requirement for starting slide finger tracking performance, for example, some preset applications. An application whitelist may be constructed, and the solution may take effect only for applications in the application whitelist. The applications in the application whitelist may be set by the user or a developer. In a case in which the vertical synchronization signal adding function is enabled, and the first application is an application in the application whitelist, the electronic device generates an additional vertical synchronization signal based on the MOVE event.

In a possible implementation, the generating the second vertical synchronization signal based on the MOVE event when the vertical synchronization signal adding function is in the enabled state and the first application is a preset application includes: when the vertical synchronization signal adding function is in the enabled state and the first application is a preset application, determining whether a moment at which the MOVE event is received meets a generation time condition of the second vertical synchronization signal; and when the moment at which the MOVE event is received meets the generation time condition of the second vertical synchronization signal, generating the second vertical synchronization signal based on the MOVE event.

According to the foregoing technical solution, the vertical synchronization signal adding function is enabled, which causes a load increase to the application to a specific extent, resulting in an increase in power consumption of the electronic device. By setting a generation time condition for generating an additional vertical synchronization signal, the following case can be avoided: an additionally generated vertical synchronization signal is too close to a generation time of an original vertical synchronization signal, which leads to a case in which the additionally generated vertical synchronization signal has little significance. In addition, when the vertical synchronization signal adding function is enabled, the first application is an application in the application whitelist, and the generation time condition for generating an additional vertical synchronization signal is met, the electronic device generates an additional vertical synchronization signal based on the MOVE event.

In a possible implementation, the determining whether a moment at which the MOVE event is received meets a generation time condition of the second vertical synchronization signal includes: obtaining a first time difference between the moment at which the MOVE event is received and a moment at which a previous first vertical synchronization signal is generated, and a second time difference between the moment at which the MOVE event is received and a moment at which a next first vertical synchronization signal is to be generated; determining whether the first time difference is greater than preset duration and whether the second time difference is greater than the preset duration; and when both the first time difference and the second time difference are greater than the preset duration, determining that the moment at which the MOVE event is received meets the generation time condition of the second vertical synchronization signal.

According to the foregoing technical solution, in a process of generating an additional vertical synchronization signal based on the MOVE event, the time difference between the moment at which the MOVE event is received and the moment at which the previous vertical synchronization signal is generated based on the screen refresh rate is obtained, and the time difference between the moment at which the MOVE event is received and the moment at which the next vertical synchronization signal is to be generated is obtained, so as to determine whether the generation time condition for additionally generating the vertical synchronization signal is met. If both the time differences are greater than the preset duration, it indicates that the additionally generated vertical synchronization signal is not too close to the generation moment of the original vertical synchronization signal, and it is determined that the moment at which the MOVE event is received meets the generation time condition of the second vertical synchronization signal, and an additional vertical synchronization signal may be generated based on the MOVE event.

In a possible implementation, after the generating a second vertical synchronization signal based on the touch event, the method further includes: when it is detected that drawing and rendering of the image frame to be refreshed and displayed are performed, disabling the vertical synchronization signal adding function.

According to the foregoing technical solution, because the vertical synchronization signal adding function is enabled, a load increase is caused to a specific extent to the application, which causes an increase in power consumption of the electronic device. If it is detected that the application thread performs drawing and rendering of an image frame to be refreshed and displayed, it indicates that the application thread does not need to determine whether the second operation reaches the sliding response threshold, that is, the vertical synchronization signal does not need to be additionally generated. Disabling the vertical synchronization signal adding function can not only reduce power consumption of the electronic device, but also avoid excessive generation of the vertical synchronization signal, which affects a working rhythm of the synthesis thread.

In a possible implementation, after the generating a second vertical synchronization signal based on the touch event, the method further includes: disabling the vertical synchronization signal adding function in response to the UP event.

According to the foregoing technical solution, because the vertical synchronization signal adding function is enabled, a load increase is caused to a specific extent to the application, which causes an increase in power consumption of the electronic device. If the UP event is detected, it indicates that the second operation of the user has ended, and the application thread does not need to determine whether the second operation reaches the sliding response threshold, that is, the vertical synchronization signal does not need to be additionally generated. Disabling the vertical synchronization signal adding function can not only reduce power consumption of the electronic device, but also avoid excessive generation of the vertical synchronization signal, which affects a working rhythm of the synthesis thread.

In a possible implementation, after the generating a second vertical synchronization signal based on the touch event, the method further includes: recording a quantity of MOVE events; and disabling the vertical synchronization signal adding function when the quantity of MOVE events is greater than a second preset value, where the second preset value is set based on the sliding response threshold of the first application.

According to the foregoing technical solution, enabling the vertical synchronization signal adding function causes a load increase to the application to a specific extent, leading to an increase in power consumption of the electronic device. After the DOWN event is received, a quantity of MOVE events is counted. In a case in which the quantity of MOVE events is greater than the second preset value, it indicates that a sliding distance of the second operation may already exceed the sliding response threshold of the application, and the application thread has most likely responded to the vertical synchronization signal to draw and render the layer. The application thread does not need to determine whether the second operation reaches the sliding response threshold, that is, no additional vertical synchronization signal needs to be generated. Disabling the vertical synchronization signal adding function can not only reduce power consumption of the electronic device, but also avoid excessive generation of the vertical synchronization signal, which affects a working rhythm of the synthesis thread.

In a possible implementation, after the performing drawing and rendering of an image frame to be refreshed and displayed, the method further includes: enabling the vertical synchronization signal adding function when a second DOWN event is received.

According to the foregoing technical solution, after the vertical synchronization signal adding function is disabled, if the second DOWN event is received, it indicates that the electronic device receives a new sliding operation, and the electronic device may increase a frequency of generating a vertical synchronization signal by enabling the vertical synchronization signal adding function, so as to increase a quantity of times of determining whether the sliding operation reaches the sliding response threshold. Compared with an existing sliding touch solution, whether the sliding operation reaches the sliding response threshold can be determined in advance, so that the application thread of the application can draw and render an image as soon as possible when the sliding operation of the user reaches the sliding response threshold, thereby shortening a delay time of the electronic device and improving finger tracking performance of the electronic device.

In a possible implementation, after the performing drawing and rendering of an image frame to be refreshed and displayed, the method further includes: synthesizing and transmitting a rendered image frame for displaying.

According to the foregoing technical solution, after the image frame to be refreshed and displayed is drawn and rendered, the rendered image frame is synthesized and sent for displaying, so that the user can see the application interface refreshed by the application on the display screen, and the application can refresh the application interface in response to the second operation of the user.

According to a second aspect, this application provides a display control method, applied to an electronic device. The method includes: receiving a first operation of a user; starting a first application in response to the first operation; receiving a second operation of the user for the first application, where the second operation includes a sliding operation; obtaining touch point coordinates and a touch event of the second operation based on a touch sampling rate of the electronic device in response to the second operation; generating a first vertical synchronization signal and a second vertical synchronization signal based on a screen refresh rate of the electronic device, and generating a third vertical synchronization signal based on the touch event, where a frequency of generating the third vertical synchronization signal based on the touch event request is equal to the touch sampling rate, and the third vertical synchronization signal is between the first vertical synchronization signal and the second vertical synchronization signal; and performing drawing and rendering of an image frame to be refreshed and displayed in response to the third vertical synchronization signal when the second operation reaches a sliding response threshold of the first application.

According to the foregoing technical solution, the electronic device generates vertical synchronization signals in two manners. In an existing manner, a vertical synchronization signal is generated based on the screen refresh rate; and in another manner, a vertical synchronization signal is generated based on the touch event. That is, by increasing a frequency of generating a vertical synchronization signal, a quantity of times of determining whether a sliding operation reaches a sliding response threshold can be increased. Compared with an existing sliding touch solution, whether a sliding operation reaches a sliding response threshold can be determined in advance, so that an application thread of an application can draw and render an image as soon as possible when a sliding operation of the user reaches a sliding response threshold, thereby shortening a delay time of the electronic device and improving finger tracking performance of the electronic device.

In a possible implementation, the performing drawing and rendering of an image frame to be refreshed and displayed in response to the third vertical synchronization signal when the second operation reaches a sliding response threshold of the first application includes: in response to the third vertical synchronization signal, determining, based on the obtained touch point coordinates, whether the second operation reaches the sliding response threshold of the first application; and performing drawing and rendering of the image frame to be refreshed and displayed when the second operation reaches the sliding response threshold of the first application.

According to the foregoing technical solution, a sliding response threshold is set for an application, so as to avoid an update of an application interface caused by unintentionally touching the application interface by a user. An application thread of the application may determine, in response to a vertical synchronization signal, whether a sliding operation reaches the sliding response threshold. By increasing a frequency of generating a vertical synchronization signal, a quantity of times of determining whether the sliding operation reaches the sliding response threshold is increased, so that the application thread of the application can draw and render an image as soon as possible when the sliding operation of the user reaches the sliding response threshold, thereby reducing a touch delay of the electronic device, and improving finger tracking performance of the electronic device.

In a possible implementation, before the responding to the third vertical synchronization signal, the method further includes: in response to the first vertical synchronization signal, determining, based on the obtained touch point coordinates, that the second sliding operation does not reach the sliding response threshold of the first application.

According to the foregoing technical solution, the application thread determines, in response to the first vertical synchronization signal, that the second sliding operation does not reach the sliding response threshold of the first application, and the application thread continues to wait for the arrival of a next vertical synchronization signal. When the third synchronization signal arrives, the application thread determines, in response to the third vertical synchronization signal, that the second sliding operation reaches the sliding response threshold of the first application, and the application thread performs image drawing and rendering. Compared with an existing sliding touch solution, it is required to wait for the arrival of the second vertical synchronization signal, and whether the sliding operation reaches the sliding response threshold may be determined in advance, so that the application thread of the application can perform image drawing and rendering as soon as possible when the sliding operation of the user reaches the sliding response threshold, thereby shortening a touch delay time of the electronic device and improving finger tracking performance of the electronic device.

According to a third aspect, this application provides an electronic device, where the electronic device includes a touch panel, a memory, and a processor. The touch panel, the memory, and the processor are coupled. The memory is configured to store program instructions. The processor is configured to read the program instructions stored in the memory, so as to implement the display control method in the first aspect, or implement the display control method in the second aspect.

According to a fourth aspect, this application provides a computer-readable storage medium. The computer-readable storage medium stores computer-readable instructions, and when the computer-readable instructions are executed by a processor, the display control method in the first aspect is implemented, or the display control method in the second aspect is implemented.

According to a fifth aspect, this application provides a chip that is coupled to a memory in an electronic device. The chip is configured to control the electronic device to execute the display control method in the first aspect, or implement the display control method in the second aspect.

In addition, for technical effects brought by the third aspect to the fifth aspect, refer to the related descriptions of the method in the designs of the method part. Details are not described herein again.

### BRIEF DESCRIPTION OF DRAWINGS

FIG. 1A is a schematic diagram of a software processing procedure of displaying an image in response to a touch operation according to an embodiment of this application;
FIG. 1B is a schematic diagram of a touch delay time in the software processing procedure shown in FIG. 1A;
FIG. 2 is a schematic diagram of touch point coordinates of a touch event according to an embodiment of this application;
FIG. 3A is a schematic diagram of a scenario of a sliding operation according to an embodiment of this application;
FIG. 3B is a schematic diagram of a scenario in which an application does not respond to a sliding operation according to an embodiment of this application;
FIG. 3C is a schematic diagram of a scenario in which an application responds to a sliding operation according to an embodiment of this application;
FIG. 4A and FIG. 4B are a flowchart of a display control method according to an embodiment of this application;
FIG. 5 is a schematic diagram of a simplified principle of the procedure shown in FIG. 4A and FIG. 4B;
FIG. 6 is a schematic diagram of a principle of a display control method according to an embodiment of this application;
FIG. 7 is a flowchart of adding a vertical synchronization signal in a display control procedure according to an embodiment of this application;
FIG. 8A to FIG. 8C are a flowchart of a display control method according to another embodiment of this application;
FIG. 9 is a flowchart of a display control method according to still another embodiment of this application;
FIG. 10 is a diagram of a software architecture of an electronic device according to an embodiment of this application;
FIG. 11 is a schematic diagram of an application scenario of a display control method according to an embodiment of this application; and
FIG. 12 is a diagram of a hardware architecture of an electronic device according to an embodiment of this application.

### DESCRIPTION OF EMBODIMENTS

In the following descriptions, the terms "first" and "second" are used only for the purpose of description, and shall not be construed as indicating or implying relative importance or implicitly indicating a quantity of indicated technical features. Therefore, features defined with "first" and "second" may explicitly or implicitly include one or more of the features. In the descriptions of embodiments of this application, words such as "for example" or "such as" are used to mean an example, an illustration, or a description. Any embodiment or design solution described as "example" or "for example" in the embodiments of this application should not be construed as being more preferred or advantageous than other embodiments or design solutions. Specifically, the words such as "example" or "for example" are used to present related concepts in a specific manner.

For ease of understanding the following description of the display control method provided in the embodiments of this application, the following describes some terms of the embodiments of this application for understanding.
(1) A touch sampling rate is used to indicate a quantity of times that a touch panel (touch panel, TP) samples and reports a touch signal within a unit time. For example, if the touch sampling rate is 120 Hz, the touch panel samples and reports a touch signal 120 times in one second. A higher touch sampling rate enables the electronic device to respond to a touch operation of the user in a timely manner. The touch operation may include a tap operation, a sliding operation, and the like. If the user continuously performs touch operations on the touch panel (for example, the user slides continuously on the screen by using a finger), a higher touch sampling rate can enable the touch panel to determine and update touch point coordinates in a more timely manner. The touch sampling rate of the touch panel is generally 120 Hz, and a corresponding sampling period may be T1=1/120=0.0083 seconds (s)=8.3 milliseconds (ms). That is, the touch panel samples and reports a touch signal every 8.3 milliseconds.
2. A screen refresh rate is a quantity of times that a screen (for example, a touch panel TP) can be refreshed every second, and the unit of which is Hertz (Hz). For example, a screen refresh rate of 60 Hz means that the screen can be refreshed 60 times within 1 second. Similarly, a screen refresh rate of 120 Hz means that the screen can be refreshed 120 times within 1 second. Therefore, a higher refresh rate indicates more frames that can be presented on the screen, and accordingly indicates a lower picture delay and higher smoothness. The electronic device can support multiple different screen refresh rates.
(3) A vertical synchronization signal may be used to trigger drawing of one or more layers. In embodiments of this application, in response to a vertical synchronization signal, the electronic device may separately draw one or more layers for each application by using each drawing thread in multiple drawing threads. That is, an application thread corresponding to each application starts to work only after a vertical synchronization signal arrives, thereby ensuring display continuity of the application interface.

It should be noted that the vertical synchronization signal may have different names in different systems or architectures. For example, in some systems or architectures, the name of the vertical synchronization signal that is used to trigger drawing of one or more layers may also be referred to as VsyncApp (VsyncApp). However, no matter what the name of the vertical synchronization signal is, as long as the signal is a synchronization signal with similar functions and conforms to the technical idea of the method provided in embodiments of this application, the signal shall fall within the protection scope of this application.

In embodiments of this application, the vertical synchronization signal is a periodic discrete signal. For example, there is a vertical synchronization signal every signal period. Because the vertical synchronization signal is a periodic signal, arrival of the vertical synchronization signal in this embodiment of this application may indicate arrival of a pulse edge of the vertical synchronization signal. The pulse edge is an edge of a pulse that can be visually observed from an oscilloscope or an observation system. In different systems, a rising edge, a falling edge, or both may be included. In an actual system, it may be implemented in a manner of timer inversion, signal interruption, or the like.

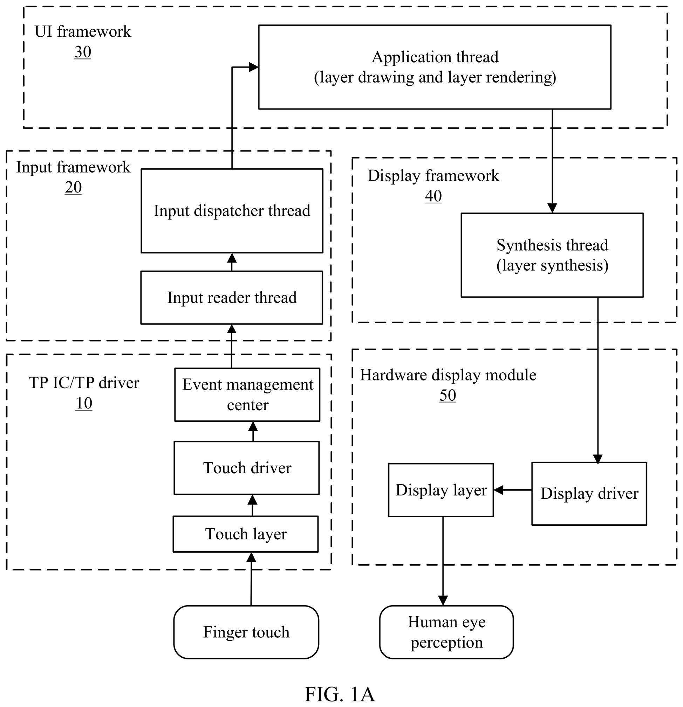

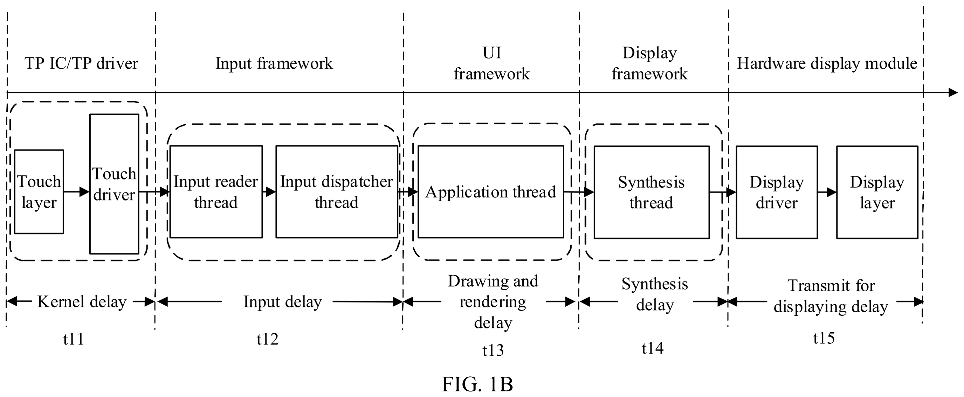

The following first describes, with reference to FIG. 1A and FIG. 1B, a touch delay time that exists when a touch operation is performed on a touch panel of an electronic device. The touch delay time may be a response speed at which the screen responds to the touch operation performed by the user on the touch panel according to the touch operation. The touch operation may be an operation in which the user contacts the touch panel or moves above the touch panel by using a finger or a stylus.

As shown in FIG. 1A, the electronic device may include a touch panel (touch panel, TP) integrated circuit (Integrated Circuit, IC)/TP driver (Driver) 10, an input (Input) framework (that is, Input framework) 20, a user interface (User Interface, UI) framework (that is, UI Framework) 30, a display (Display) framework (that is, Display Framework) 40, and a hardware display module 50.

The software processing procedure of the electronic device may include the following steps.

Step (1): In an example in which the user performs a touch operation on a touch panel by using a finger, after a touch layer in the TP IC/TP driver 10 collects the touch operation of the finger of the user, the touch driver reports corresponding touch point coordinates and a touch event to an event management center (Event Hub). The touch event may include a down (DOWN) event, a move (MOVE) event, and an up (UP) event.

Step (2): An input reader (Input Reader) thread of the Input framework 20 may receive the touch point coordinates and the touch event reported by the Event Hub, and then send the touch point coordinates and the touch event to an input dispatcher (Input Dispatcher) thread; and the Input Dispatcher thread reports the touch point coordinates and the touch event to an application thread in the UI framework 30. For example, an application currently running in the foreground is an instant messaging application (Application, APP), and the instant messaging APP performs application interface refresh in response to the touch operation of the user's finger. The application thread may be a thread of the instant messaging APP.

Step (3): An application thread in the UI framework 30 draws one or more layers based on the touch point coordinates and the touch event, and renders the one or more layers.

Step (4): A synthesis thread in the display framework 40 performs layer synthesis on the rendered one or more layers to obtain an image frame.

Step (5): A display driver of the hardware display module 50 receives the synthesized image frame, and the display driver may drive a display layer to display the synthesized image frame, for example, the display layer is a liquid crystal display panel. After the display layer displays the image frame, the image displayed by the display layer can be perceived by human eyes.

In some embodiments, finger tracking performance may reflect a speed at which a screen responds to a touch operation performed by a user on a touch panel by using a finger or a stylus, that is, a speed at which the electronic device performs step (1) to step (5) in the foregoing procedure. A faster response speed indicates a shorter touch delay time, better finger tracking performance of the electronic device, and better touch experience of the user. A slower response speed indicates a longer touch delay time, worse finger tracking performance of the electronic device, and worse touch experience of the user.

According to the display control method provided in this application, the display framework 40 is triggered to additionally generate a vertical synchronization signal, so that a quantity of times that the application thread in the UI framework 30 determines whether a sliding operation reaches a sliding response threshold can be increased. The application thread can determine whether the sliding operation reaches the sliding response threshold in advance, so that the application thread can start working as soon as the user sliding operation reaches the sliding response threshold, thereby improving finger tracking performance of an electronic device compared with an existing sliding touch solution.

The touch delay time involved in the foregoing software processing procedure is shown in FIG. 1B. For example, in the foregoing step (1), in the process in which the TP IC/TP driver 10 collects the touch operation and reports the touch point coordinates and the touch event to the Input framework 20, a kernel delay t11 shown in FIG. 1B may exist. In the foregoing step (2), in the process in which the Input framework 20 receives the reported touch point coordinates and the reported touch event, and inputs the touch point coordinates and the touch event into the UI framework, an input delay t12 shown in FIG. 1B may exist. In the foregoing step (3), the application thread in the UI framework draws one or more layers, and performs layer rendering on the one or more layers drawn, which may have a drawing and rendering delay t13 shown in FIG. 1B. In the foregoing step (4), when the synthesis thread in the Display framework 40 performs layer synthesis, a synthesis delay t14 shown in FIG. 1B may exist. In the foregoing step (5), in a process in which the hardware display module 50 displays the synthesized image frame, a transmit for displaying delay t15 shown in FIG. 1B may exist.

In different application scenarios, touch operations performed by the user on the touch panel are different, and specific meanings of corresponding finger tracking performance are also different. For example, when the user touches the touch panel and releases the touch panel, finger tracking performance in responding to the touch by the electronic device is tap finger tracking performance. When the user slides the touch panel, finger tracking performance in responding to the slide by the electronic device is slide finger tracking performance. When the user just starts to touch the touch panel, finger tracking performance in responding to the touch by the electronic device is start finger tracking performance. When the user slides to an edge of the touch panel or the end of content, finger tracking performance in responding to the slide by the electronic device is shuttle finger tracking performance. When the user just starts to touch and slide the touch panel, finger tracking performance in responding to the touch and slide by the electronic device is starting slide finger tracking performance. This embodiment of this application mainly relates to starting slide finger tracking performance. The starting slide finger tracking performance described in this application may be represented as: duration of a process in which the user starts to touch an application interface displayed on the touch panel and slides and the application refreshes the application interface in response to the slide. That is, the touch delay time involved in the starting slide finger tracking performance may include a kernel delay t11, an input delay t12, a drawing and rendering delay t13, a synthesis delay t14, and a transmit for displaying delay t15.

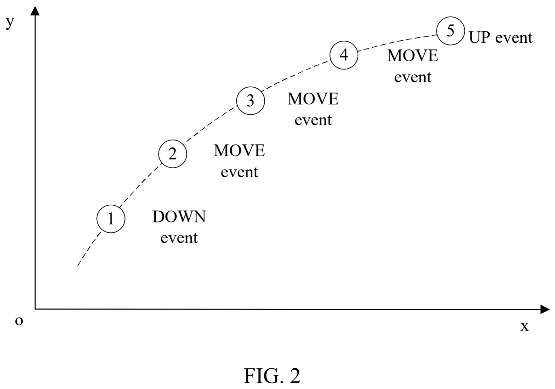

To better understand the starting slide finger tracking performance described in this embodiment of this application, touch point coordinates corresponding to a touch event in a process in which the user performs a sliding operation on the touch panel and the touch panel responds to the sliding operation are described. Referring to FIG. 2, it is assumed that an XY coordinate system is constructed by using a touch panel of an electronic device, the coordinate system uses a vertex of a lower left corner of the touch panel as the origin, and an X-axis direction and a Y-axis direction are shown in FIG. 2. The touch event may be an event that when the user interacts by using the touch panel, the touch panel detects a touch operation of the user and reports the touch operation at a corresponding location. During a sliding operation, the touch event is continuously generated in a process of sliding performed by a finger of the user, and the touch point coordinates are also continuously generated in the process of sliding performed by the finger of the user.

When the user performs a sliding operation on the touch panel of the electronic device, a touch sensor in the electronic device may detect a touch operation performed by the user on the touch panel. The touch sensor may transmit the detected touch operation to an application processor to determine a type of a touch event. Specifically, in a process in which the user starts to touch the touch panel and slides until the hand is lifted, touch events generated at a Kernel (Kernel) layer of the electronic device may successively include: a pressing event (also referred to as a DOWN event), several moving events (also referred to as a MOVE event), and a release event (also referred to as an UP event), where a quantity of the MOVE events depends on a time in which the user touches the screen. The DOWN event is a pressing event generated when the user starts to touch the touch panel, and is generally used to start a new operation or gesture. The MOVE event is a moving event generated when the user moves a finger on the screen, and may be used to track a moving track of the finger, so as to implement functions such as dragging and sliding. The UP event is a release event generated when the user lifts the finger, and is generally used to complete an operation or gesture.

In FIG. 2, it is assumed that the location point 1 is touch point coordinates corresponding to a DOWN event on the touch panel, that is, the location point 1 is a start location of a sliding operation of the user on the touch panel, and the location point 5 is touch point coordinates corresponding to an UP event on the touch panel, that is, the location point 5 is an end location of the sliding operation of the user on the touch panel. The location point 2, the location point 3, and the location point 4 are touch point coordinates corresponding to a MOVE event on the touch panel after the DOWN event. In a UI sliding scenario, to avoid an unintentional touch, the electronic device generally responds to a sliding operation after the sliding operation of the user reaches a sliding response threshold. That is, after a DOWN event, a quantity of subsequent MOVE events needs to reach a specific threshold, so that the electronic device responds to the sliding operation. It is assumed that in a sliding process of the user on the touch panel, when the user slides from the location point 1 to the location point 3, the Event Hub may periodically send touch point coordinates and a touch event to the Input framework, and the Input framework reports the touch point coordinates and the touch event to the UI framework. The UI framework may determine, based on the touch point coordinates reported by the Input framework, whether a sliding distance meets a sliding response threshold. Assuming that the UI framework determines that the distance between the current location point 3 and the start location point 1 meets the sliding response threshold, the UI framework may start responding to the sliding operation of the user at the location point 3.

Specifically, with reference to FIG. 1A and FIG. 2, in response to the sliding operation of the user, the Event Hub in the TP IC/TP driver 10 may periodically report the touch point coordinates and the touch event of the user on the touch panel to the Input framework 20 according to a touch sampling rate. The Input Dispatcher thread in the Input framework 20 may report the touch point coordinates and the touch event to the UI framework 30. When the application thread in the UI framework 30 senses the touch event corresponding to the sliding operation, the application thread may request a vertical synchronization signal from the Display framework 40. The application thread in the UI framework 30 may determine, at a moment at which the vertical synchronization signal arrives, whether a sliding distance of the sliding operation meets the sliding response threshold. If the sliding distance of the sliding operation meets the sliding response threshold, the application thread draws a layer corresponding to the sliding operation, and renders a drawn layer. If the sliding distance of the sliding operation does not meet the sliding response threshold, the application thread does not draw a layer. The application thread continues to wait for arrival of a next vertical synchronization signal, and determines again whether a sliding distance of the sliding operation meets the sliding response threshold. A synthesis thread in the Display framework 40 may perform layer synthesis on the rendered layer to obtain an image frame. Finally, a display layer in the hardware display module 50 may refresh and display the foregoing image frame. Only after the vertical synchronization signal arrives, the application thread in the UI framework 30 starts to determine whether layer drawing and rendering are required (whether the sliding distance of the sliding operation meets the sliding response threshold), and when it is determined that layer drawing and rendering are required, layer drawing and rendering are performed to ensure a display rhythm of the touch panel.

In some embodiments, an application interface is updated due to a user's unintentional touch of an application interface, which brings bad use experience to the user. To prevent this, before drawing the one or more layers, the application thread may first determine whether a sliding distance between a current touch position of the user and a start touch position exceeds the sliding response threshold. If the sliding distance is less than the sliding response threshold, the current touch operation may be determined as an unintentional touch, and the application thread does not perform layer drawing and rendering in response to the touch operation, that is, the application does not refresh the application interface in response to the sliding operation. Applications installed on the electronic device may have different sliding response thresholds, and the sliding response thresholds of the applications may be preset in an application development phase.

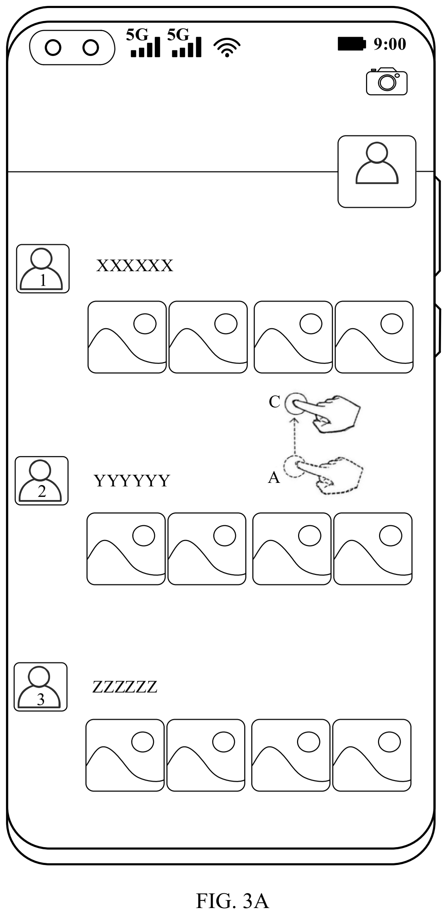

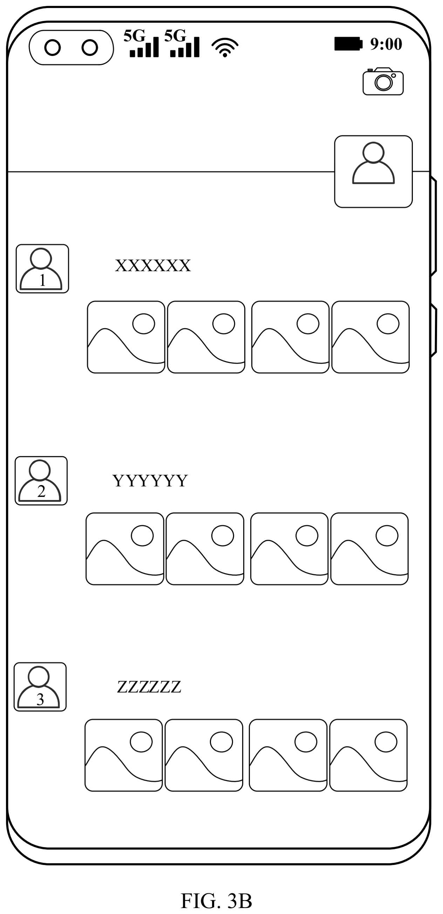

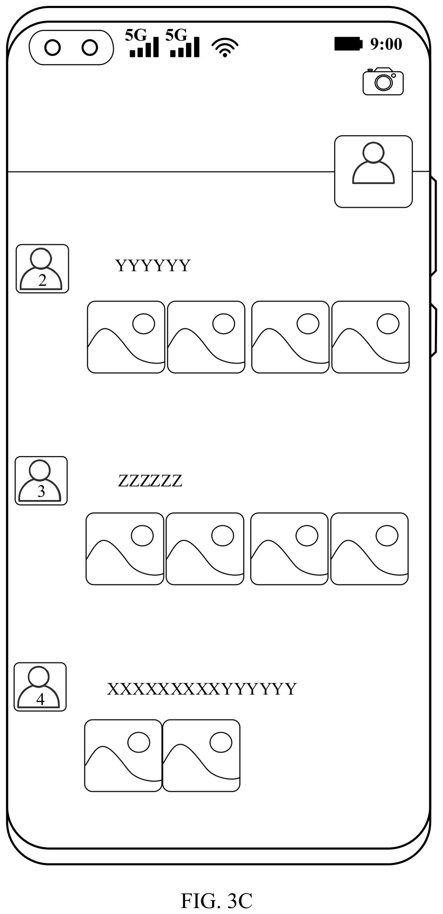

As shown in FIG. 3A, it is assumed that an instant messaging APP is installed on the electronic device, and the touch panel currently displays a first application interface of the instant messaging APP. When the user's finger touches the touch panel of the electronic device and slides on the touch panel (for example, slides from point A to point C), if a sliding distance of the user's finger on the touch panel is less than a sliding response threshold of the instant messaging APP, the interface of the instant messaging APP does not change. As shown in FIG. 3B, the instant messaging APP displays still the first application interface. If the sliding distance of the finger of the user on the touch panel is greater than the sliding response threshold of the instant messaging APP, the instant messaging APP may update the application interface in response to the sliding operation. As shown in FIG. 3C, the application interface displayed by the instant messaging APP is updated from the first application interface to a second application interface.

In this embodiment of this application, by setting a sliding response threshold of an application, an update of a user interface caused by a user's unintentional touch can be avoided, and user experience is improved. It is assumed that the sliding response threshold of the instant messaging APP is 24px (or denoted as 8vp). That is, when it is detected in a frame corresponding to a MOVE event that a sliding displacement between a position of a finger touch point of the user and a start touch position in the start frame exceeds 24px, the current sliding operation for the instant messaging APP may be determined as a valid sliding operation. When it is detected in a frame corresponding to the MOVE event that a sliding displacement between a position of a finger touch point of the user and the start touch position in the start frame does not exceed 24px, the current sliding operation for the instant messaging APP may be determined as an invalid sliding operation.

For the electronic device, in addition to the kernel delay t11, the input delay t12, the drawing and rendering delay t13, the synthesis delay t14, and the transmit for displaying delay t15 mentioned above, the following factors may affect the starting slide finger tracking performance:
The touch sampling rate and the screen refresh rate of the touch panel are generally fixed. For example, the touch sampling rate is generally 120 Hz. To balance the continuity and picture smoothness of the electronic device, a relatively common screen refresh rate is 60 Hz. That is, there is a time difference between a moment at which it may be determined based on reported touch point coordinates that a sliding operation has reached a sliding response threshold and a moment at which the application thread starts to work in response to a vertical synchronization signal (starting to work may include determining, by the application thread, whether the sliding operation reaches the sliding response threshold, and performing drawing and rendering when the sliding operation reaches the sliding response threshold). In addition, a clock used to record a touch sampling period and a clock used to record a screen refresh period are usually not synchronized. The two may be controlled by different hardware circuits, and work at different frequencies. Even if the touch sampling rate is the same as the screen refresh rate (for example, even if the touch sampling rate and the screen refresh rate are both 120 Hz), there may be still a time difference between a moment at which it may be determined based on reported touch point coordinates that a sliding operation has reached a sliding response threshold and a moment at which the application thread starts to work in response to a vertical synchronization signal. It is assumed that the sliding operation actually reaches the sliding response threshold of the instant messaging APP at a moment t21. In this case, the t21 moment may not reach the user interface refresh period of the instant messaging APP. It is assumed that the vertical synchronization signal arrives at a t22 moment after the t21 moment, that is, an arrival time of the application interface refresh period is the t22 moment after the t21 moment. The application thread of the instant messaging APP needs to wait until the interface refresh period arrives to determine whether the sliding operation reaches the sliding response threshold, and performs drawing and rendering of the layer. Because of a time difference between the t21 moment and the t22 moment, a touch delay time is prolonged, and starting slide finger tracking performance of the electronic device is reduced.

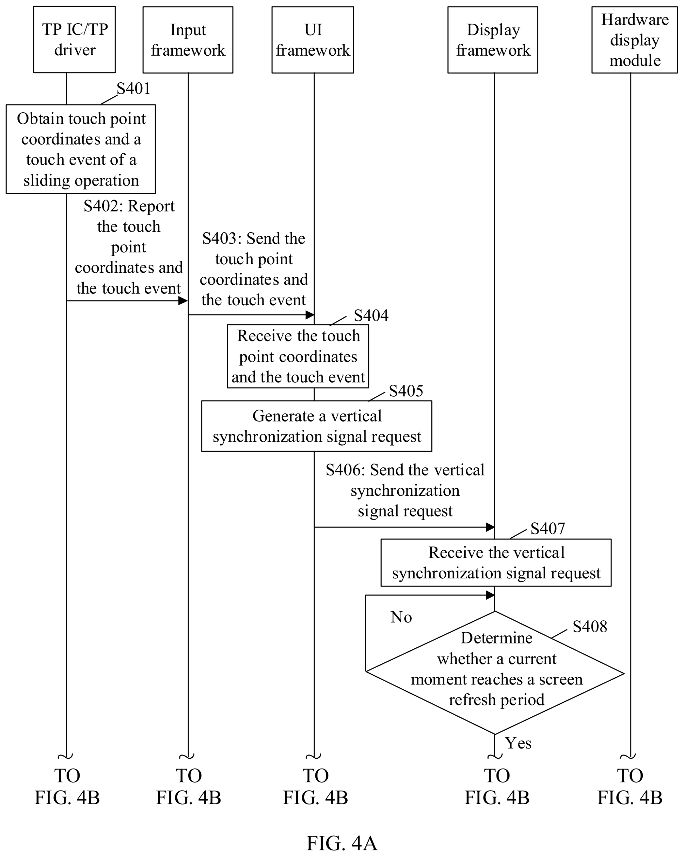

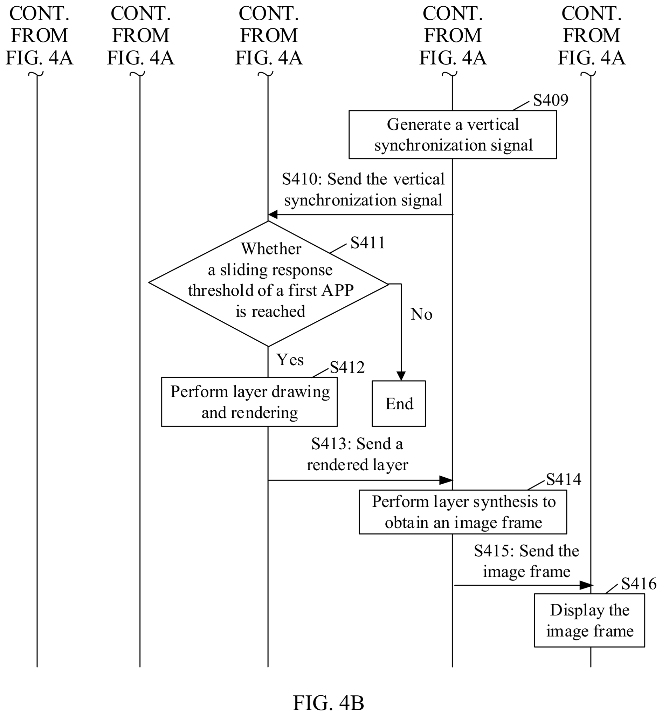

To further understand the touch delay time involved in the starting slide finger tracking performance of this application, the following describes in detail, with reference to FIG. 4A and FIG. 4B, a software processing procedure in which when a user performs a sliding operation on an application interface of a first APP, the first APP responds to the sliding operation and performs displaying. FIG. 4A and FIG. 4B are described by using an example in which the application interface of the first APP is displayed on a screen of the electronic device. The first APP may be an APP that supports a sliding operation to update an application interface. An application type of the first APP is not limited in this application instance.

S401: In response to a sliding operation performed by a user on the application interface of the first APP, a TP IC/TP driver periodically obtains touch point coordinates and a touch event of the sliding operation.

In this embodiment of this application, in a process in which the first APP is running in the foreground, the user may perform a sliding operation on a touch panel to update the application interface of the first APP. When the user performs the sliding operation on the application interface of the first APP displayed on the touch panel, a touch layer in the TP IC/TP driver may sense a position of the finger of the user to determine corresponding touch point coordinates, and a touch driver in the TP IC/TP driver may generate a touch event based on the sliding operation of the user.

An Event Hub in the TP IC/TP driver may periodically report the touch point coordinates and the touch event to an Input framework, so that the system can identify and process the sliding operation of the user.

For example, when a preset touch sampling rate is 120 Hz, the TP IC/TP driver completes collection and reporting of the touch point coordinates and the touch event every 8.3 milliseconds.

S402: The TP IC/TP driver reports the touch point coordinates and the touch event to the Input framework.

In some embodiments, the Event Hub in the TP IC/TP driver may periodically report touch point coordinates and a touch event to the Input framework. Specifically, in a process in which the user performs the sliding operation, the TP IC/TP driver may periodically collect the touch point coordinates and the touch event of the user sliding operation according to the preset touch sampling rate, and report the touch point coordinates and the touch event to the Input framework.

In some embodiments, in the sliding operation process of the user, touch events may include one DOWN event, one or more MOVE events, and one UP event.

S403: The Input framework sends the touch point coordinates and the touch event to a UI framework.

In some embodiments, an Input Reader thread in the Input framework may receive the touch point coordinates and the touch event that are reported by the Event Hub. In another embodiment, the Input Reader thread in the Input framework may also actively read the touch point coordinates and the touch event from the Event Hub.

After receiving the touch point coordinates and the touch event that are reported by the Event Hub, the Input Reader thread may wake an Input Dispatcher thread. The Input Dispatcher thread sends the touch point coordinates and the touch event to the UI framework, so that the Input Dispatcher thread assigns the touch point coordinates and the touch event to a corresponding application thread for processing. For example, the user performs a sliding operation on the application interface of the first APP displayed on the touch panel, and the Input Dispatcher thread in the Input framework distributes the touch point coordinates and the touch event to an application thread (for example, a thread of the first APP) that needs to be aware of the sliding operation in the UI framework.

For example, the first APP is an instant messaging APP, and when the user needs to browse a status of a friend in the instant messaging APP, in response to a sliding operation performed by the user on a friend status display interface of the instant messaging APP, the TP IC/TP driver periodically collects touch point coordinates and a touch event of the sliding operation, and reports the touch point coordinates and the touch event to the Input framework. The Input framework may distribute the touch point coordinates and the touch event reported by the TP IC/TP driver to a thread of the instant messaging APP in the UI framework, so as to notify the thread of the instant messaging APP to draw and render a page (refreshed page) in response to the sliding operation.

S404: The UI framework receives the touch point coordinates and the touch event.

In some embodiments, the TP IC/TP driver periodically obtains and reports the touch point coordinates and the touch event to the Input framework, that is, the application thread (for example, the thread of the first APP) in the UI framework may also periodically receive the touch point coordinates and the touch event that are newly sent by the Input framework.

S405: The UI framework generates a vertical synchronization signal request in response to the touch event.

In some embodiments, the touch events may include a DOWN event, a MOVE event, and an UP event, and an application thread (e.g., the thread of the first APP) in the UI framework may generate a vertical synchronization signal request in response to the DOWN event, the MOVE event, or the UP event.

In some embodiments, this embodiment of this application relates to starting slide finger tracking performance. After the sliding operation of the user reaches a sliding response threshold of the first APP (that is, after several MOVE events), the first APP responds to the sliding operation to perform application interface refreshing. The application thread (for example, the thread of the first APP) in the UI framework may also generate a vertical synchronization signal request in response to only a MOVE event in the touch event.

In some embodiments, the application thread (for example, the thread of the first APP) in the UI framework may calculate a sliding distance and a direction of the sliding operation based on the touch point coordinates. In a subsequent display process, to avoid a phenomenon such as a screen tearing that occurs on the display screen (the touch panel), the application thread (for example, the thread of the first APP) in the UI framework may generate a vertical synchronization signal request after the touch event is received, and may synchronize the following multiple time points: a time point at which the application thread starts to work, a time point at which a synthesis thread (SurfaceFlinger thread) performs layer synthesis, and a time point of waking up the liquid crystal display panel to start refreshing an image frame. After the foregoing three time points are synchronized, screen freeze and screen tearing can be eliminated, improving a display effect of the touch panel.

S406: The UI framework sends the vertical synchronization signal request to the Display framework.

In some embodiments, after generating the vertical synchronization signal request, the application thread (for example, the thread of the first APP) in the UI framework may send the vertical synchronization signal request to the Display framework, so as to wake up the SurfaceFlinger thread to synthesize one or more rendered layers.

S407: The Display framework receives the vertical synchronization signal request.

In an embodiment of this application, the Display framework is configured to process a graphical element in an application and a user interface, and interact with the hardware display screen. The Display framework provides an abstract interface for managing resources such as the display screen, windows, views, and drawing surfaces. The SurfaceFlinger thread is a display engine in the Android system, is a core part of the Display framework, and is an important component of hardware support and underlying management functions required to implement the Display framework. The SurfaceFlinger thread is responsible for combining rendering results of each application into final images and outputting them to the display screen. The SurfaceFlinger thread communicates with a hardware driver by using a hardware abstraction layer (Hardware Abstraction Layer, HAL), and controls operations such as allocation, synthesis, and page flip of an image buffer, to implement efficient graphics display.

In some embodiments, to ensure a smooth display effect, the SurfaceFlinger thread periodically checks whether the current drawing matches a signal period of the vertical synchronization signal on the display screen for proper frame rate limiting and adjustment. For example, when receiving the vertical synchronization signal request sent by the application, the SurfaceFlinger thread waits until a next screen refresh period starts, then generates a vertical synchronization signal, and sends the vertical synchronization signal to the UI frame, so as to instruct the application thread (for example, the thread of the first APP) to start drawing and rendering a layer, so as to ensure that images on the screen are always smooth and fluent.

In some embodiments, a signal period T2 of the vertical synchronization signal is a reciprocal of the screen refresh rate currently used by the electronic device. Using a screen refresh rate of 60 Hz as an example, the signal period of the vertical synchronization signal is T2=1/60=0.01667 seconds (s)=16.67 milliseconds (ms).

S408: The Display framework determines whether a current moment reaches a screen refresh period.

In some embodiments, to ensure that the first APP can render the image to the display screen in a timely manner, a smooth display effect is ensured, and a tearing condition or another bad condition is avoided, when the SurfaceFlinger thread in the Display framework receives the vertical synchronization signal request, it needs to determine whether the current moment reaches the screen refresh period (that is, the signal period T2 of the vertical synchronization signal), so as to generate the vertical synchronization signal. If it is determined that the current moment reaches the screen refresh period T2, step S409 is performed, and the vertical synchronization signal is generated according to the vertical synchronization signal request. If it is determined that the current moment does not reach the screen refresh period T2, step S408 is performed, and it is further determined whether the current moment reaches the screen refresh period.

S409: If the current moment reaches the screen refresh period, the Display framework generates a vertical synchronization signal in response to the vertical synchronization request.

In some embodiments, when it is determined that the current moment reaches the screen refresh period, the SurfaceFlinger thread in the Display framework may generate the vertical synchronization signal in response to the vertical synchronization signal request.

S410: The Display framework sends the vertical synchronization signal to the UI framework.

In some embodiments, after generating the vertical synchronization signal, the SurfaceFlinger thread in the Display framework may send the vertical synchronization signal to the UI framework, so that a corresponding application thread in the UI framework may start working in response to the vertical synchronization signal. For example, the thread of the first APP is woken up to determine whether the sliding operation reaches the sliding response threshold, perform layer drawing and rendering, and the like.

S411: In response to the vertical synchronization signal, the UI framework determines, based on the touch point coordinates, whether the sliding operation reaches the sliding response threshold of the first APP.

In some embodiments, the sliding response threshold of the first APP may be set by a developer of the first APP in an APP development phase. To prevent the user from unintentionally touching the touch panel to update an application interface currently displayed by the first APP, the application thread in the UI framework, for example, the thread of the first APP needs to determine whether the sliding operation meets the sliding response threshold of the first APP according to the touch point coordinates before starting to draw a new layer in response to the vertical synchronization signal. If the sliding operation reaches the sliding response threshold of the first APP, step S412 is performed, and the thread of the first APP draw and render a new layer in response to the vertical synchronization signal. If the sliding operation does not reach the sliding response threshold of the first APP, the procedure ends. The thread of the first APP does not draw or render a layer. The thread of the first APP may wait for a next vertical synchronization signal to arrive. When the next vertical synchronization signal arrives, it is determined, based on new touch point coordinates, whether the sliding operation meets the sliding response threshold of the first APP.

In a sliding operation process of the user, the UI framework may periodically receive the touch point coordinates and the touch event. The UI framework may calculate a distance of the current sliding operation based on the touch point coordinates received at the current moment and touch point coordinates corresponding to the start of the sliding, so as to determine whether the current sliding operation reaches the slide response threshold. If the distance between the touch point coordinates received at the current moment and the touch point coordinates corresponding to the start of the sliding is greater than or equal to a sliding response threshold, it is determined that the sliding operation reaches the sliding response threshold; or if the distance between the touch point coordinates received at the current moment and the touch point coordinates corresponding to the start of the sliding is less than the sliding response threshold, it is determined that the sliding operation does not reach the sliding response threshold.

S412: If it is determined that the sliding operation reaches the sliding response threshold of the first APP, the UI framework draws and renders a layer.

In some embodiments, when it is determined that the sliding operation reaches the sliding response threshold, the application thread (for example, the thread of the first APP) in the UI framework may draw and render a new layer.

S413: The UI framework sends the rendered layer to the Display framework.

In some embodiments, the application thread (for example, the thread of the first APP) in the UI framework may send the rendered layer to the Display framework after rendering of the layer, so as to perform layer synthesis.

S414: The Display framework synthesizes the rendered layer to obtain an image frame.

In some embodiments, the SurfaceFlinger thread in the Display framework may synthesize the rendered layer to obtain the image frame.

S415: The Display framework sends the image frame to a hardware display module.

In some embodiments, the SurfaceFlinger thread in the Display framework may send the image frame to a display driver of the hardware display module.

S416: The hardware display module displays the image frame.

In some embodiments, after the display driver of the hardware display module receives the synthesized image frame, the display driver may drive the display layer to display the synthesized image frame. After the display layer displays the image frame, the image displayed by the display layer can be perceived by human eyes.

In some embodiments, the application thread (for example, the thread of the first APP) in the UI framework determines, in response to the vertical synchronization signal, whether the sliding operation reaches the sliding response threshold. In a case in which the sliding operation reaches the sliding response threshold, drawing and rendering of a layer are performed. The rendered layer may be sent to the Display framework, and the SurfaceFlinger thread in the Display framework synthesizes the layer to obtain the image frame. The SurfaceFlinger thread may send the synthesized image frame to the hardware display module, and the hardware display module displays the image frame. In this way, the following multiple time points may be synchronized: a time point of waking up the thread of the first APP to start working, a time point of waking up the SurfaceFlinger thread to perform layer synthesis, and a time point of waking up the liquid crystal display panel to start refreshing an image frame, thereby eliminating screen freeze and screen tearing, and improving a display effect of the display screen.

In the procedure shown in FIG. 4A and FIG. 4B, a clock for recording a touch sampling period and a clock for recording a screen refresh period are generally out of synchronization, may be controlled by different hardware circuits, and work at different frequencies. In a case in which the touch sampling rate is the same as or different from the screen refresh rate, the following problem may occur: When the sliding operation actually reaches the moment of the slide response threshold of the first APP, the SurfaceFlinger thread in the Display framework determines that the current moment does not reach the screen refresh period, and the SurfaceFlinger thread sends a vertical synchronization signal to the UI framework only when the current moment reaches the screen refresh period. The application thread (for example, the thread of the first APP) in the UI framework can receive the vertical synchronization signal only when the refresh period arrives, and then determine, in response to the vertical synchronization signal, whether the sliding operation has reached the sliding response threshold of the first APP. When it is determined that the sliding operation reaches the sliding response threshold of the first APP, the application thread (for example, the thread of the first APP) in the UI framework performs layer drawing and rendering. This prolongs a touch delay time, and results in poor finger tracking performance of the electronic device.

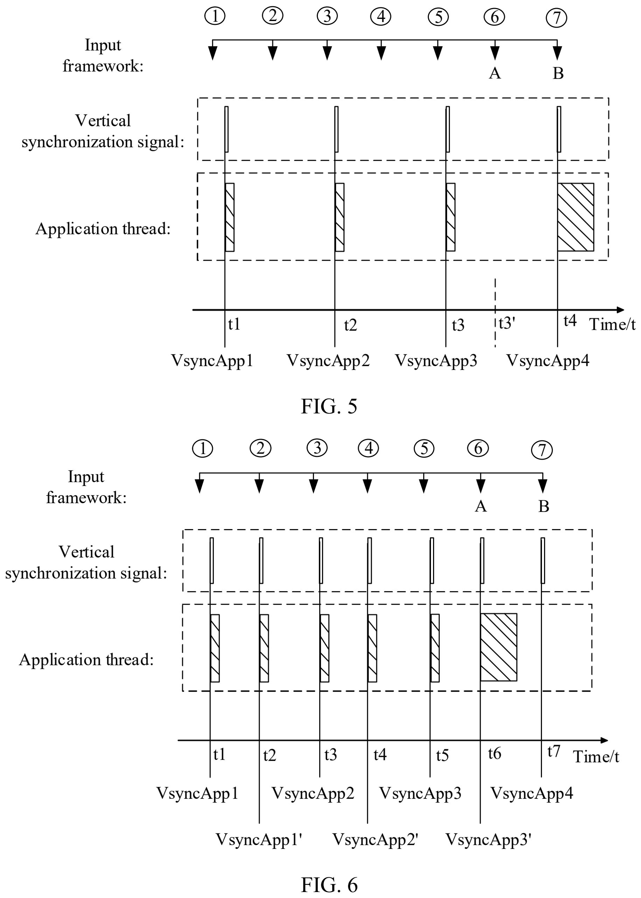

Specifically, with reference to a schematic diagram of a simplified principle shown in FIG. 5, it is assumed that a touch sampling rate of the touch panel is 120 Hz, that is, the Input framework may receive, every 8.3 milliseconds, touch point coordinates and a touch event that are reported by the TP IC/TP driver. It is assumed that the application thread (for example, the thread of the first APP) in the UI framework works at a 60 Hz screen refresh rate, that is, a working period of the application thread is 16.67 milliseconds. The user slides from the position point 1 to the position point 7 in a process of performing a sliding operation on the touch panel. It is assumed that when the user slides from the location point 1 to the location point 5, the sliding response threshold is not reached. During the period of time, the application thread may receive three vertical synchronization signals VsyncApp1, VsyncApp2, and VsyncApp3. Because the sliding response threshold is reached when the user slides to the location point 6 (for example, point A), the application thread does not perform layer drawing and rendering in response to any one of the VsyncApp1, the VsyncApp2, and the VsyncApp3 (the application thread determines whether the sliding response threshold is reached in response to the VsyncApp1, the VsyncApp2, and the VsyncApp3, and because the sliding response threshold is not reached during sliding from the location point 1 to the location point 5, the application thread continues to wait until the next vertical synchronization signal), and the sliding response threshold is reached at the location point 6. However, because the working period of the application thread is 16.67 milliseconds, the screen refresh period is not reached at a moment at which the user slides to the location point 6, the application thread does not receive the vertical synchronization signal, and the application thread cannot start working. After the vertical synchronization signal VsyncApp4 arrives, the application thread can start to work. That is, the user needs to slide to the location point 7 (point B) to meet the screen refresh period, and the application thread starts working only when the user slides to the location point 7. It can be learned that the application thread cannot start working at the location point 6, and needs to continue to wait for the user to slide to the location point 7. Only when the screen refresh period arrives, the application thread can start working in response to the vertical synchronization signal VsyncApp4. The time in which the application thread waits for the screen refresh period to arrive may even exceed the sampling period T1 (that is, a time interval between the moment t3' and the moment t4 may be greater than 8.3 milliseconds), which has a great influence on the starting finger tracking performance.

Therefore, how to reduce a waiting time of the application thread (a time for waiting for the screen refresh period to arrive) is a key for improving starting finger tracking performance of the electronic device in a sliding operation process. To resolve this problem, an embodiment of this application further provides a display control method. The waiting time can be shortened by increasing vertical synchronization signals. With reference to FIG. 6, a principle of the display control method is briefly described. It is assumed that the touch sampling rate of the touch panel is 120 Hz, that is, a period in which the Input framework receives touch point coordinates and a touch event that are reported by the TP IC/TP driver is 8.3 milliseconds. When the application thread (for example, the thread of the first APP) in the UI framework works at a 60 Hz screen refresh rate, that is, a working period of the application thread is 16.67 milliseconds. The user slides from the position point 1 to the position point 7 in a process of performing a sliding operation on the touch panel.

It is assumed that when the user slides from the location point 1 to the location point 5, a sliding response threshold is not reached, and the sliding response threshold is reached at the location point 6. In the solution in FIG. 5, when the user slides from the location point 1 to the location point 6, the application thread may receive a vertical synchronization signal VsyncApp1 at a moment t1, receive a vertical synchronization signal VsyncApp2 at a moment t3, and receive a vertical synchronization signal VsyncApp3 at a moment t5. According to the display control method provided in this embodiment of this application, each time the Input framework receives the touch point coordinates and the touch event reported by the TP IC/TP driver, the Input framework notifies the Display framework to add a vertical synchronization signal, that is, increase a frequency of generating the vertical synchronization signal, and further increase a quantity of times that the application thread determines whether the current sliding operation reaches the sliding response threshold, so that the application thread can start working as soon as the user sliding operation reaches the sliding response threshold.

For example, the Input framework may receive, at a moment t2, touch point coordinates and a touch event that are corresponding to the touch location point 2 and that are reported by the TP IC/TP driver, and the Input framework may notify, at the moment t2, the Display framework to add a new vertical synchronization signal VsyncApp1'. The Input framework may receive, at a moment t4, touch point coordinates and a touch event that are corresponding to the touch location point 4 and that are reported by the TP IC/TP driver, and the Input framework may notify, at the moment t4, the Display framework to add a new vertical synchronization signal VsyncApp2'. The Input framework may receive, at a moment t6, touch point coordinates and a touch event that are corresponding to the touch location point 6 and that are reported by the TP IC/TP driver, and the Input framework may notify, at the moment t6, the Display framework to add a new vertical synchronization signal VsyncApp3'. At the moment t6, the application thread may determine, in response to the vertical synchronization signal VsyncApp3', that the sliding operation of the user reaches the sliding response threshold. Further, the application thread may perform layer drawing and rendering at the location point 6. The application thread does not need to wait until the user slides to the location point 7 to start working in response to the VsyncApp4 as in the solution in FIG. 5. In response to the vertical synchronization signal VsyncApp3', the application thread may perform determining in advance for the sliding response threshold and perform layer drawing and rendering, thereby shortening a touch delay time, that is, a time between the t6 moment and the t7 moment is saved, and finger tracking performance of the electronic device is improved compared with the solution in FIG. 5. To avoid generation of excessive vertical synchronization signals that affects a working rhythm of the Surfaceflinger thread in the Display framework, in the display control method provided in this embodiment of this application, after the application thread starts to draw the layer, the Input framework stops notifying the Display framework to add a vertical synchronization signal, that is, the Display framework recovers to generate a vertical synchronization signal according to the solution in FIG. 5, that is, generate a vertical synchronization signal according to the screen refresh period.

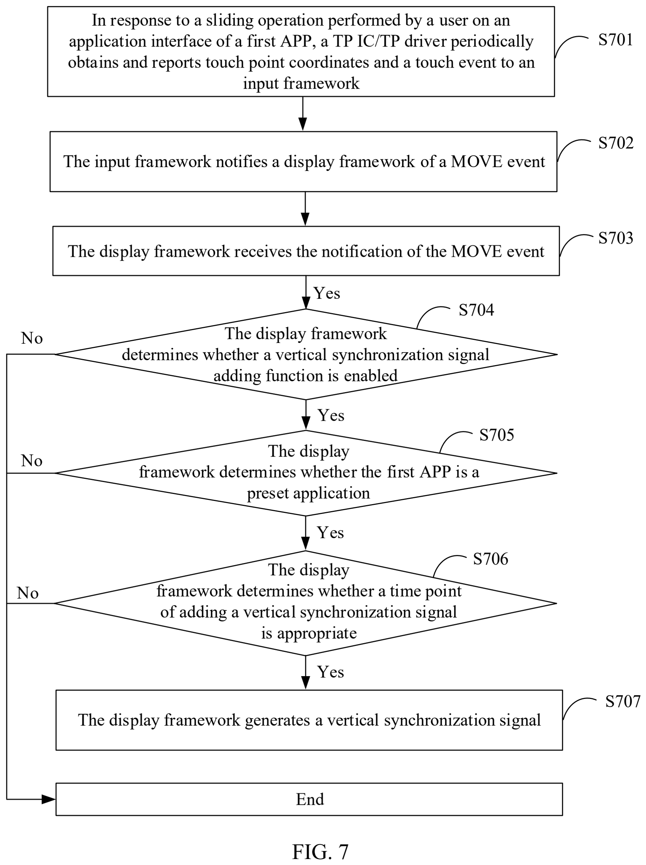

With reference to FIG. 7, the following describes in detail a software processing procedure of adding a vertical synchronization signal by using the display control method provided in this application.

The display control method provided in this embodiment of this application may be executed by a display control apparatus. The display control may alternatively be a CPU of the electronic device or a control module that is in the electronic device and that is configured to execute the display control method. In this embodiment of this application, the display control method provided in this embodiment of this application is described by using an example in which the electronic device executes the display control method.

FIG. 7 is described by using an example in which an application interface of a first APP is displayed on a screen of the electronic device. The first APP may be an APP that supports a sliding operation to update an application interface. An application type of the first APP is not limited in this application instance.

S701: In response to a sliding operation performed by a user on the application interface of the first APP, a TP IC/TP driver periodically obtains and reports touch point coordinates and a touch event to an Input framework.

S702: The Input framework notifies a Display framework of a MOVE event.

In some embodiments, this embodiment of this application relates to starting slide finger tracking performance. When the sliding operation of the user reaches a sliding response threshold (after one or more MOVE events) of the first APP, a thread of the first APP may perform layer drawing and rendering as soon as possible in response to a vertical synchronization signal. Therefore, the Display framework may be set to attempt to add a vertical synchronization signal based on the MOVE event in the touch event.

S703: The Display framework receives the notification of the MOVE event.

In some embodiments, after the Input framework notifies the MOVE event to the Display framework, the Display framework may receive the notification of the MOVE event.

S704: The Display framework determines whether a vertical synchronization signal adding function is enabled.

In some embodiments, to avoid generation of excessive vertical synchronization signals that affect a working rhythm of the Surfaceflinger thread, the vertical synchronization signal adding function may be in a disabled state at some moments. After receiving the notification of the MOVE event, the Surfaceflinger thread in the Display framework may attempt to add a vertical synchronization signal. Before attempting to generate an additional vertical synchronization signal, the Surfaceflinger thread needs to first determine whether the vertical synchronization signal adding function is in an enabled state. If the vertical synchronization signal adding function is in the enabled state, step S703 is performed. If the vertical synchronization signal adding function is in the disabled state, the procedure ends, that is, the Surfaceflinger thread does not attempt to add a vertical synchronization signal, and waits for a notification of a next MOVE event to make a decision.

In some embodiments, the vertical synchronization signal adding function may be disabled when the following cases occur in a sliding operation process of the user: a. The application thread starts layer drawing. b. An UP event is detected. For example, the application thread starts layer drawing, and the Input framework stops notifying the MOVE event to the Display framework. Because the Display framework cannot receive the notification of the MOVE event, the Surfaceflinger thread does not attempt to generate an additional vertical synchronization signal.

When a new sliding operation is generated, the vertical synchronization signal adding function can be enabled again, that is, when a new DOWN event and a MOVE event are detected, the vertical synchronization signal adding function can be enabled again.

In some embodiments, the Input framework may count parsed MOVE events after parsing to obtain DOWN events. The Input framework may notify the Display framework of the MOVE event only after receiving the MOVE event a first preset quantity of times, so that the SurfaceFlinger thread in the Display framework can attempt to add a vertical synchronization signal in response to a MOVE event that actually may reach the sliding response threshold, and this can avoid triggering adding of a vertical synchronization signal multiple times in abnormal sliding scenarios. For example, for an unintentional touch of the display screen, because a sliding distance of the unintentional touch is limited, a first preset quantity of MOVE events generally cannot be reached, that is, the MOVE event is not notified to the Display framework to attempt to add a vertical synchronization signal, thereby avoiding an exception that the Display framework attempts to add a vertical synchronization signal because of the unintentional touch. The first preset quantity may be set and adjusted according to a sliding response threshold of an application. This is not limited in this embodiment of this application. For example, the first preset quantity is 13.

In some embodiments, the Input framework may also stop notifying the MOVE event to the Display framework after sending the MOVE event a second preset quantity of times. For one sliding operation, receiving a second preset quantity of MOVE events indicates that the sliding operation reaches the sliding response threshold of the application, and the application thread has already performed layer drawing and rendering. In this case, the vertical synchronization signal adding function needs to be disabled. The Input framework stops notifying the Display framework of the MOVE event, and the second preset quantity may also be set and adjusted according to the sliding response threshold of the application. This is not limited in this embodiment of this application, for example, the second preset quantity is 20.

S705: If the vertical synchronization signal adding function is in an enabled state, the Display framework determines whether the first APP is a preset application.

In the solution of this application, the Surfaceflinger thread in the Display framework additionally generates a vertical synchronization signal, so that when the user sliding operation reaches the sliding response threshold, the thread of the first APP can quickly respond to the vertical synchronization signal to draw and render a layer, which may bring a load increase problem to the application to a certain extent. Therefore, the solution in this application may be set to take effect only in a scenario in which there is a specific requirement for starting sliding finger tracking performance, for example, some specific applications. In this embodiment of this application, an application whitelist may be constructed, and the solution takes effect for only applications in the application whitelist. The applications in the application whitelist may be set by the user or a developer, which is not limited in this embodiment of this application.

For example, the Surfaceflinger thread in the Display framework may determine, by comparing whether the first APP is an application in the application whitelist, whether the first APP is a preset application. If the first APP is an application in the application whitelist, it is determined that the first APP is a preset application, and step S705 is performed. If the first APP is not an application in the application whitelist, it is determined that the first APP is not a preset application, the Surfaceflinger thread does not need to attempt to add a new vertical synchronization signal, the procedure ends, and the Surfaceflinger thread waits for a notification of a next MOVE event to make a decision.

S706: If the first APP is a preset application, the Display framework determines whether a time point for adding a vertical synchronization signal is appropriate.

In some embodiments, before attempting to add a vertical synchronization signal, the Surfaceflinger thread in the Display framework determines whether a current moment is suitable for adding a vertical synchronization signal, so that it can be avoided that an additionally generated vertical synchronization signal is too close to an original vertical synchronization signal (a vertical synchronization signal generated based on the screen refresh period), and consequently, an additionally generated vertical synchronization signal has little significance.

For example, after it is determined that the first APP is a preset application, the Surfaceflinger thread determines whether a time difference between the current moment and a generation moment of a previous vertical synchronization signal (a vertical synchronization signal generated based on the screen refresh period) is less than preset duration, and determines whether a time difference between the current moment and a generation moment of a next vertical synchronization signal (a vertical synchronization signal generated based on the screen refresh period) is less than the preset duration. If neither of the two time differences is less than the preset duration, the Surfaceflinger thread determines that the time point for adding the vertical synchronization signal is appropriate, and step S706 is performed. If either of the two time differences is less than the preset duration, the Surfaceflinger thread determines that the time point for adding the vertical synchronization signal is inappropriate, and the Surfaceflinger thread forgets to add the vertical synchronization signal, the procedure ends, and the Surfaceflinger thread waits for a notification of a next MOVE event to make a decision.

In some embodiments, the preset duration may be set according to an actual requirement. This is not limited in this embodiment of this application, for example, the preset duration may be 0.5 ms.

S707: If the time point for adding a vertical synchronization signal is appropriate, the Display framework generates a vertical synchronization signal.

In some embodiments, if the time point for adding a vertical synchronization signal is appropriate, the Surfaceflinger thread in the Display framework generates a vertical synchronization signal. The Display framework may send the newly generated vertical synchronization signal to the UI framework, so that the application thread (for example, the thread of the first APP) in the UI framework may determine, in response to the newly added vertical synchronization signal, whether the sliding operation of the user reaches the sliding response threshold of the first APP. If it is determined that the sliding operation of the user reaches the sliding response threshold of the first APP, the thread of the first APP may draw and render a layer. If it is determined that the sliding operation of the user does not reach the sliding response threshold of the first APP, the thread of the first APP does not perform layer drawing and rendering, the thread of the first APP continues to wait for a next vertical synchronization signal to arrive, and when the next vertical synchronization signal arrives, it is determined whether the sliding operation of the user meets the sliding response threshold of the first APP.

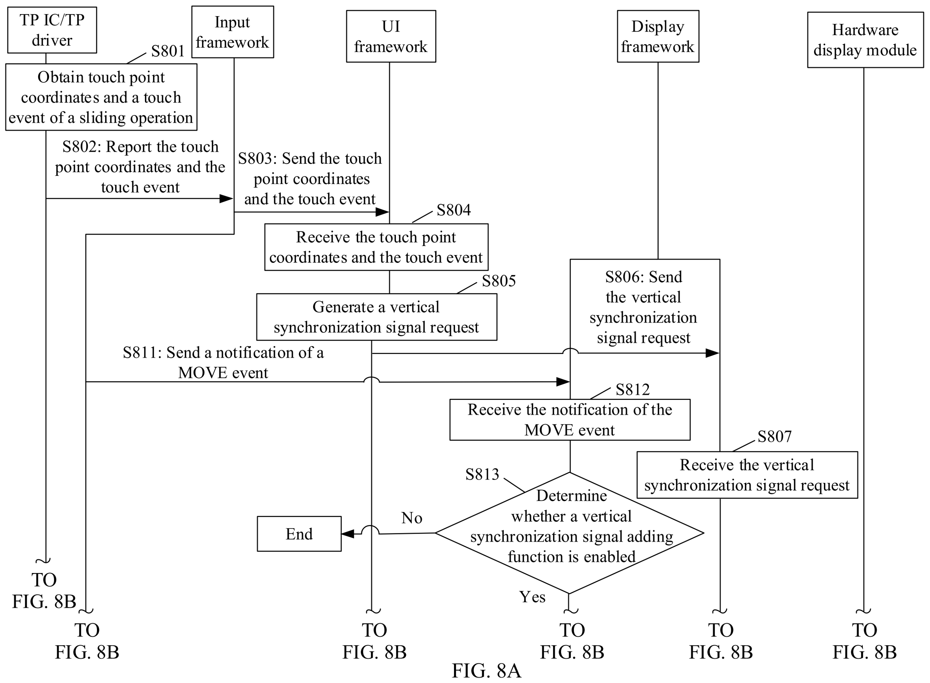

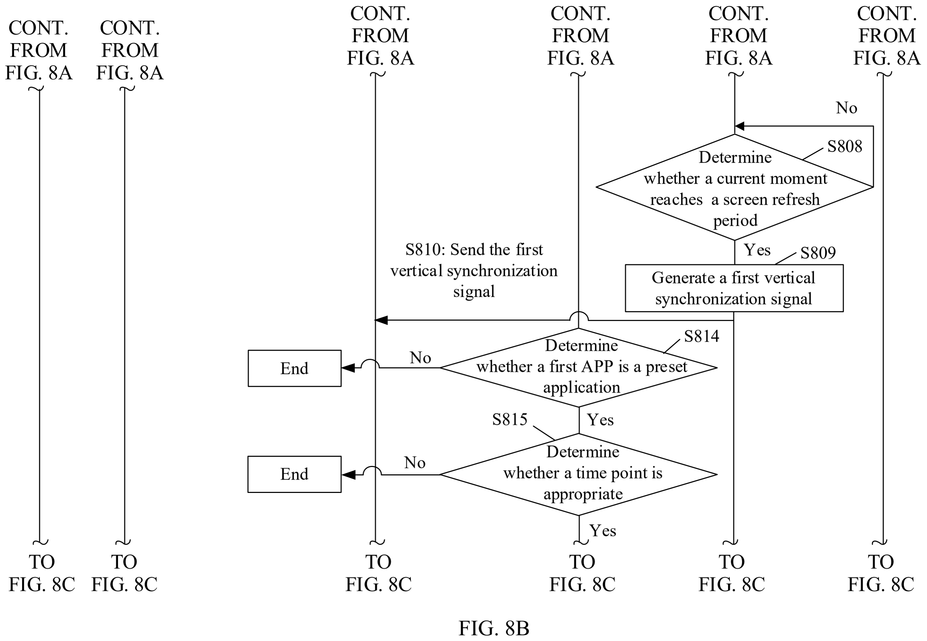

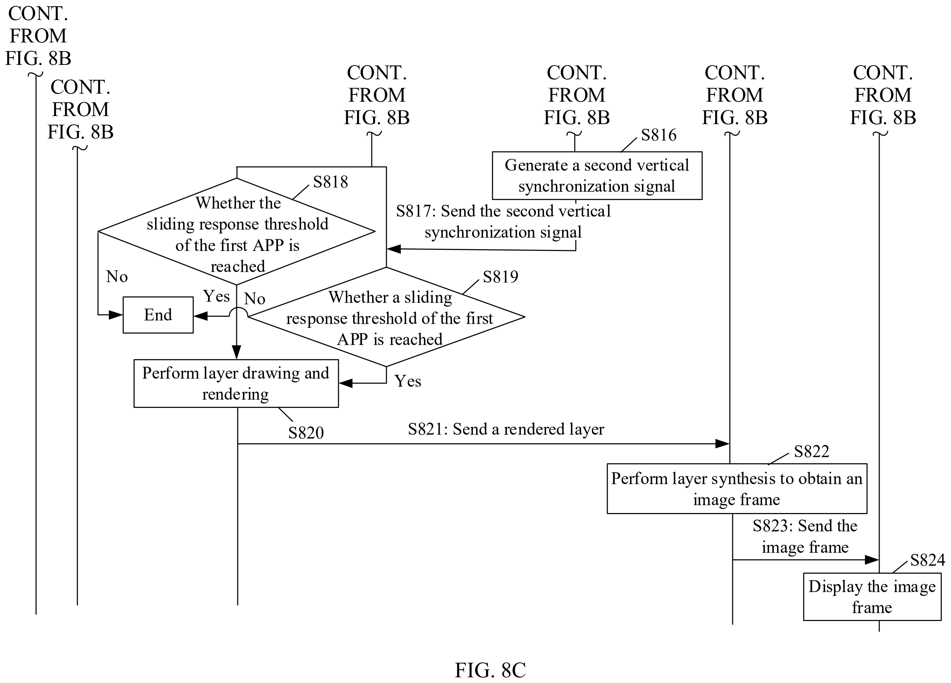

The following describes, with reference to FIG. 8A to FIG. 8C, in detail a software processing procedure in which after the display control method provided in this application is used, when a user performs a sliding operation on a touch panel, an interface of the screen responds to the sliding operation to perform displaying.

The display control method provided in this embodiment of this application may be executed by a display control apparatus. The display control may further be a CPU of the electronic device or a control module that is in the electronic device and that is configured to execute the display control method. In this embodiment of this application, the display control method provided in this embodiment of this application is described by using an example in which the electronic device executes the display control method.

FIG. 8A to FIG. 8C are described by using an example in which an application interface of a first APP is displayed on a screen of the electronic device. The first APP may be an APP that supports a sliding operation to update an application interface. An application type of the first APP is not limited in this application instance. This embodiment of this application relates to starting slide finger tracking performance. When the sliding operation of the user reaches a sliding response threshold (after one or more MOVE events) of the first APP, a thread of the first APP may perform layer drawing and rendering as soon as possible in response to a vertical synchronization signal. Therefore, the Display framework may be set to attempt to add a vertical synchronization signal based on the MOVE event in the touch event.

S801: In response to a sliding operation performed by a user on the application interface of the first APP, a TP IC/TP driver periodically obtains touch point coordinates and a touch event of the sliding operation.

In this embodiment of this application, in a process in which the user uses the first APP, an application interface currently displayed by the first APP may need to be updated (for example, a sliding operation is used to slide up or down the application interface to browse for more information). When the user performs a sliding operation on the application interface of the first APP displayed on the touch panel, the TP IC/TP driver may periodically obtain touch point coordinates and a touch event of the sliding operation, and periodically report the touch point coordinates and the touch event to an Input framework. The touch event may include a DOWN (DOWN) event, a MOVE (MOVE) event, and a MOVE (UP) event.

S802: The TP IC/TP driver reports the touch point coordinates and the touch event to the Input framework.

Step S802 in this embodiment of this application is similar to step S402 in the foregoing embodiment. To avoid repetition, details are not described herein again.

S803: The Input framework sends the touch point coordinates and the touch event to a UI framework.

Step S803 in this embodiment of this application is similar to step S403 in the foregoing embodiment. To avoid repetition, details are not described herein again.

S804: The UI framework receives the touch point coordinates and the touch event.

Step S804 in this embodiment of this application is similar to step S404 in the foregoing embodiment. To avoid repetition, details are not described herein again.

S805: The UI framework generates a vertical synchronization signal request in response to the touch event.

Step S805 in this embodiment of this application is similar to step S405 in the foregoing embodiment. To avoid repetition, details are not described herein again.

S806: The UI framework sends the vertical synchronization signal request to the Display framework.

Step S806 in this embodiment of this application is similar to step S406 in the foregoing embodiment. To avoid repetition, details are not described herein again.

S807: The Display framework receives the vertical synchronization signal request.

Step S807 in this embodiment of this application is similar to step S407 in the foregoing embodiment. To avoid repetition, details are not described herein again.

S808: The Display framework determines whether a current moment reaches a screen refresh period.

Step S808 in this embodiment of this application is similar to step S408 in the foregoing embodiment. To avoid repetition, details are not described herein again.

S809: If the current moment reaches the screen refresh period, the Display framework generates a first vertical synchronization signal.

Step S809 in this embodiment of this application is similar to step S409 in the foregoing embodiment. To avoid repetition, details are not described herein again.

S810: The Display framework sends the first vertical synchronization signal to the UI framework.

Step S810 in this embodiment of this application is similar to step S410 in the foregoing embodiment. To avoid repetition, details are not described herein again.

S811: The Input framework notifies the Display framework of the MOVE event.

In some embodiments, step S811 may be performed in parallel with step S803.

Step S811 in this embodiment of this application is similar to step S702 in the foregoing embodiment. To avoid repetition, details are not described herein again.

S812: The Display framework receives the notification of the MOVE event.

Step S812 in this embodiment of this application is similar to step S703 in the foregoing embodiment. To avoid repetition, details are not described herein again.

S813: The Display framework determines whether a vertical synchronization signal adding function is enabled.

Step S813 in this embodiment of this application is similar to step S704 in the foregoing embodiment. To avoid repetition, details are not described herein again.

S814: If the vertical synchronization signal adding function is in an enabled state, the Display framework determines whether the first APP is a preset application.

Step S814 in this embodiment of this application is similar to step S705 in the foregoing embodiment. To avoid repetition, details are not described herein again.

S815: If the first APP is a preset application, the Display framework determines whether a time point for adding a vertical synchronization signal is appropriate.

Step S815 in this embodiment of this application is similar to step S706 in the foregoing embodiment. To avoid repetition, details are not described herein again.

S816: If the time point for adding a vertical synchronization signal is appropriate, the Display framework generates a second vertical synchronization signal.

Step S816 in this embodiment of this application is similar to step S707 in the foregoing embodiment. To avoid repetition, details are not described herein again.

S817: The Display framework sends the second vertical synchronization signal to the UI framework.

S818: In response to the first vertical synchronization signal, the UI framework determines, based on the touch point coordinates, whether the sliding operation reaches the sliding response threshold of the first APP.

Step S818 in this embodiment of this application is similar to step S411 in the foregoing embodiment. To avoid repetition, details are not described herein again.

S819: In response to the second vertical synchronization signal, the UI framework determines, based on the touch point coordinates, whether the sliding operation reaches the sliding response threshold of the first APP.

In some embodiments, an execution order of S818 and S819 depends on a sequence in which the UI framework receives the first vertical synchronization signal and the second vertical synchronization signal. For example, if the UI framework first receives the first vertical synchronization signal, and then receives the second vertical synchronization signal, in the method in this embodiment of this application, step S818 is first performed, and then step S819 is performed. If the UI framework first receives the second vertical synchronization signal, and then receives the first vertical synchronization signal, in the method in this embodiment of this application, step S819 is first performed, and then step S818 is performed. Because whether the time point for adding a vertical synchronization signal is proper is determined in step S815 in the method in this embodiment of this application, a case in which step S818 and step S819 are performed in parallel does not exist.

S820: If it is determined that the sliding operation reaches the sliding response threshold of the first APP, the UI framework draws and renders a layer.

In some embodiments, if the thread of the first APP in the UI framework determines, in response to the first vertical synchronization signal, that the current sliding operation reaches the sliding response threshold of the first APP, the thread of the first APP draws and renders a new layer. If the thread of the first APP in the UI framework determines, in response to the second vertical synchronization signal, that the current sliding operation reaches the sliding response threshold of the first APP, the thread of the first APP draws and renders a new layer.

S821: The UI framework sends the rendered layer to the Display framework.

Step S821 in this embodiment of this application is similar to step S413 in the foregoing embodiment. To avoid repetition, details are not described herein again.

S822: The Display framework synthesizes the rendered layer to obtain an image frame.

Step S822 in this embodiment of this application is similar to step S414 in the foregoing embodiment. To avoid repetition, details are not described herein again.

S823: The Display framework sends the image frame to a hardware display module.

Step S823 in this embodiment of this application is similar to step S415 in the foregoing embodiment. To avoid repetition, details are not described herein again.

S824: The hardware display module displays the image frame.

Step S824 in this embodiment of this application is similar to step S416 in the foregoing embodiment. To avoid repetition, details are not described herein again.

According to the display control method in this embodiment of this application, each time the Input framework receives the MOVE event reported by the TP IC/TP driver, the MOVE event is notified to the SurfaceFlinger thread in the Display framework, so that the SurfaceFlinger thread may add a second vertical synchronization signal in response to the notification of the MOVE event, so that the application thread (for example, the thread of the first APP) in the UI framework can receive the first vertical synchronization signal and receive the second vertical synchronization signal, and can separately determine, in response to the first vertical synchronization signal, whether the current sliding operation reaches the sliding response threshold, and determine, in response to the second vertical synchronization signal, whether the current sliding operation reaches the sliding response threshold. This increases a quantity of times that the application thread determines whether the current sliding operation reaches the sliding response threshold, and when it is determined that the sliding operation reaches the sliding response threshold, the application thread performs layer rendering and rendering, so as to improve finger tracking performance of the electronic device.

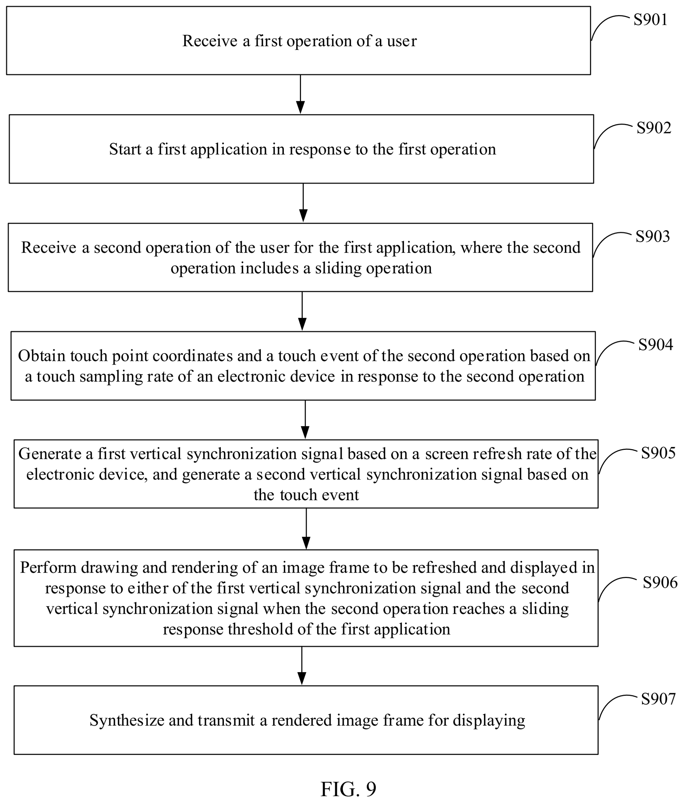

FIG. 9 shows a display control method according to an embodiment of this application. The display control method may be applied to an electronic device. The electronic device is installed with a first application. An application type of the first application is not limited in this application instance. The display control method includes the following steps.

S901: Receive a first operation of a user.

In some embodiments, a first application is installed on the electronic device, and an icon of the first application may be displayed on a home screen of the electronic device. The first operation may refer to a tap operation performed on the icon of the first application displayed on the home screen of the electronic device.

S902: Start a first application in response to the first operation.

In some embodiments, the user taps the icon of the application, and the electronic device may start the first application in response to the tap operation.

S903: Receive a second operation of the user for the first application, where the second operation includes a sliding operation.

In some embodiments, it is assumed that the first application supports that an application interface is refreshed by using a sliding operation. In a process in which the user uses the first application, a requirement for refreshing an application interface currently displayed may exist. The user may perform the second operation on the application interface of the first application, for example, perform a sliding operation on the application interface of the first application. The first application may perform application interface refreshing in response to the sliding operation.

S904: Obtain touch point coordinates and a touch event of the second operation based on a touch sampling rate of the electronic device in response to the second operation.

The touch sampling rate is used to indicate a quantity of times that the touch panel samples and reports a touch signal within a unit time. For example, if the touch sampling rate is 120 Hz, the touch panel samples and reports a touch signal 120 times in one second. A higher touch sampling rate enables the electronic device to respond to the touch operation of the user in a timely manner. When the user performs a sliding operation on the touch panel of the electronic device, a touch sensor in the electronic device may detect a touch operation performed by the user on the touch panel, and a TP IC/TP driver may periodically obtain touch point coordinates and a touch event of the second operation according to the touch sampling rate.

S905: Generate a first vertical synchronization signal based on the screen refresh rate of the electronic device, and generate a second vertical synchronization signal based on the touch event.

The screen refresh rate is a quantity of times that a screen (such as a touch panel) can refresh a picture per second. For example, a screen refresh rate of 60 Hz indicates that the screen can refresh display 60 times in 1 second, and a screen refresh rate of 120 Hz indicates that the screen can refresh display 120 times in 1 second. Therefore, the higher the screen refresh rate, the more frames can be presented on the screen. The electronic device may generate the first vertical synchronization signal based on the screen refresh rate, that is, a generation frequency of the first vertical synchronization signal is equal to the screen refresh rate, thereby eliminating screen freeze and screen tearing.

The electronic device further additionally generates the second vertical synchronization signal based on the touch event. A generation frequency of the vertical synchronization signal is increased, and a quantity of times of subsequently determining whether the sliding operation reaches the sliding response threshold may be increased. Therefore, it is possible to determine whether the sliding operation reaches the sliding response threshold in advance, so that the application thread of the first application can draw and render an image as soon as the sliding operation of the user reaches the sliding response threshold, thereby shortening a touch delay time of the electronic device, and improving starting slide finger tracking performance of the electronic device compared with an existing sliding touch solution.

In some embodiments, a frequency of generating the second vertical synchronization signal based on the touch event request is equal to the touch sampling rate, so that the application thread of the first application can quickly perform determining for the sliding response threshold when the sliding operation of the user reaches the sliding response threshold, and further can quickly draw and render an image.

In some embodiments, the touch event of the second operation may include a DOWN event, several MOVE events, and an UP event. Only at a moment at which the DOWN event is received, the user starts sliding, and obviously the sliding response threshold of the application cannot be reached. There is no need to request to generate an additional second vertical synchronization signal based on the DOWN event. The UP event represents an end of the user slide. Additional generation of a second vertical synchronization signal is requested based on the UP event, and a generation opportunity is relatively late. Therefore, it is impossible to determine in advance whether the sliding operation reaches the sliding response threshold, the sliding operation ends, and there is no need to determine whether the sliding operation reaches the sliding response threshold. In addition, additional generation of a second vertical synchronization signal is requested based on the MOVE event request, so that it can be determined in advance whether the sliding operation reaches the sliding response threshold, thereby shortening a touch delay time of the electronic device, and improving finger tracking performance of the electronic device.

In some embodiments, after the DOWN event is received, MOVE events are counted, and in a case in which a quantity of MOVE events is greater than a first preset value, a second vertical synchronization signal is generated based on a MOVE event request, so as to attempt to add a second vertical synchronization signal in response to a MOVE event that actually may reach the sliding response threshold. This avoids adding too many meaningless second vertical synchronization signals, and prevents an abnormal sliding scenario from triggering adding of a second vertical synchronization signal multiple times.

In some embodiments, the electronic device supports enabling or disabling a vertical synchronization signal adding function. For example, a "Vertical synchronization signal adding function" icon may be added to the electronic device setting interface. The user of the electronic device may choose, according to an actual requirement, to enable or disable the vertical synchronization signal adding function. In a case in which the vertical synchronization signal adding function is in an enabled state, the electronic device additionally generates a second vertical synchronization signal based on the MOVE event.

In some embodiments, because the vertical synchronization signal adding function is enabled, a load increase is caused to a specific extent to the application, which causes an increase in power consumption of the electronic device. It may be set that the solution takes effect only in a scenario in which there is a specific requirement for starting slide finger tracking performance, for example, some preset applications. An application whitelist may be constructed, and the solution may take effect only for applications in the application whitelist. The applications in the application whitelist may be set by the user or a developer. That is, in a case in which the vertical synchronization signal adding function is enabled, and the first application is an application in the application whitelist, the electronic device generates an additional second vertical synchronization signal based on the MOVE event.

In some embodiments, a generation time condition for additionally generating the second vertical synchronization signal may be set, so as to avoid a case in which the additionally generated second vertical synchronization signal is too close to the original first vertical synchronization signal generated based on the frequency refresh rate, and consequently the additionally generated second vertical synchronization signal has little significance. That is, when the vertical synchronization signal adding function is in an enabled state, the first application is an application in the application whitelist, and a moment at which the MOVE event is received meets the generation time condition for generating the additional second vertical synchronization signal, the electronic device generates the additional second vertical synchronization signal based on the MOVE event.

In some embodiments, it may be determined, in the following manner, whether the moment at which the MOVE event is received meets the generation time condition for generating the additional second vertical synchronization signal: obtaining a first time difference between the moment at which the MOVE event is received and a generation moment of a previous first vertical synchronization signal, and a second time difference between the moment at which the MOVE event is received and a generation moment of a next first vertical synchronization signal to be generated; and determining whether the first time difference is greater than preset duration, and whether the second time difference is greater than the preset duration; and when both the first time difference and the second time difference are greater than the preset duration, determining that the moment at which the MOVE event is received meets the generation time condition of the second vertical synchronization signal. That is, if both the first time difference and the second time difference are greater than the preset duration, it indicates that the additionally generated second vertical synchronization signal is not too close to the original first vertical synchronization signal, and it is determined that the moment at which the MOVE event is received meets the generation time condition of the second vertical synchronization signal. If the vertical synchronization signal adding function is in an enabled state, and the first application is an application in the application whitelist, the electronic device may generate the additional second vertical synchronization signal based on the MOVE event.

S906: Perform drawing and rendering of an image frame to be refreshed and displayed in response to either of the first vertical synchronization signal and the second vertical synchronization signal when the second operation reaches a sliding response threshold of the first application.

By setting the sliding response threshold of the first application, it can avoid a case in which the application interface of the first application is refreshed due to an unintentional touch by the user. The application thread of the first application may determine, based on the currently obtained touch point coordinates, whether the second operation reaches the sliding response threshold of the first application in response to either of the first vertical synchronization signal and the second vertical synchronization signal. If the second operation reaches the sliding response threshold of the first application, the application thread of the first application performs drawing and rendering of the image frame to be refreshed and displayed. That the application thread performs drawing and rendering of the image frame to be refreshed and displayed may refer to drawing and rendering of a layer of the image frame to be refreshed and displayed.

In some embodiments, because the vertical synchronization signal adding function is enabled, a load increase is caused to a specific extent to the application, which causes an increase in power consumption of the electronic device. If it is detected that the application thread performs drawing and rendering of an image to be refreshed and displayed, it indicates that the application thread does not need to determine whether the second operation reaches the sliding response threshold, that is, the second vertical synchronization signal does not need to be additionally generated, and the vertical synchronization signal adding function can be disabled. Disabling the vertical synchronization signal adding function can not only reduce power consumption of the electronic device, but also avoid excessive generation of the second vertical synchronization signal, which affects a working rhythm of the synthesis thread.

In some embodiments, if an UP event is detected, it indicates that the second operation of the user has ended, and the application thread does not need to determine whether the second operation reaches the sliding response threshold, that is, an additional second vertical synchronization signal does not need to be generated, and the vertical synchronization signal adding function may be disabled.

In some embodiments, when a quantity of received MOVE events is greater than a second preset value, the vertical synchronization signal adding function may be disabled. If the quantity of MOVE events is greater than the second preset value, it indicates that a sliding distance of the second operation may have already exceeded the sliding response threshold of the first application program, and the application thread has most likely responded to the vertical synchronization signal to draw and render the layer. The application thread does not need to determine whether the second operation reaches the sliding response threshold, that is, the application thread does not need to generate an additional second vertical synchronization signal, and the vertical synchronization signal adding function may be disabled.

In some embodiments, after the vertical synchronization signal adding function is disabled, if a new sliding operation is received, that is, a new DOWN event is received, the electronic device may enable the vertical synchronization signal adding function, so as to increase a generation frequency of the vertical synchronization signal, and further increase a quantity of times of determining whether the sliding operation reaches the sliding response threshold, thereby improving finger tracking performance of the electronic device.

S907: Synthesize and transmit a rendered image frame for displaying.

In some embodiments, after the image frame to be refreshed and displayed is drawn and rendered, the rendered image frame is synthesized and transmitted for displaying, so that the user can see the application interface refreshed by the first application on the display screen, and the first application can refresh the application interface in response to the second operation of the user. Synthesizing and transmitting the rendered image frame for displaying may be synthesizing the rendered layer to obtain the image frame, and then transmitting the image frame for displaying.

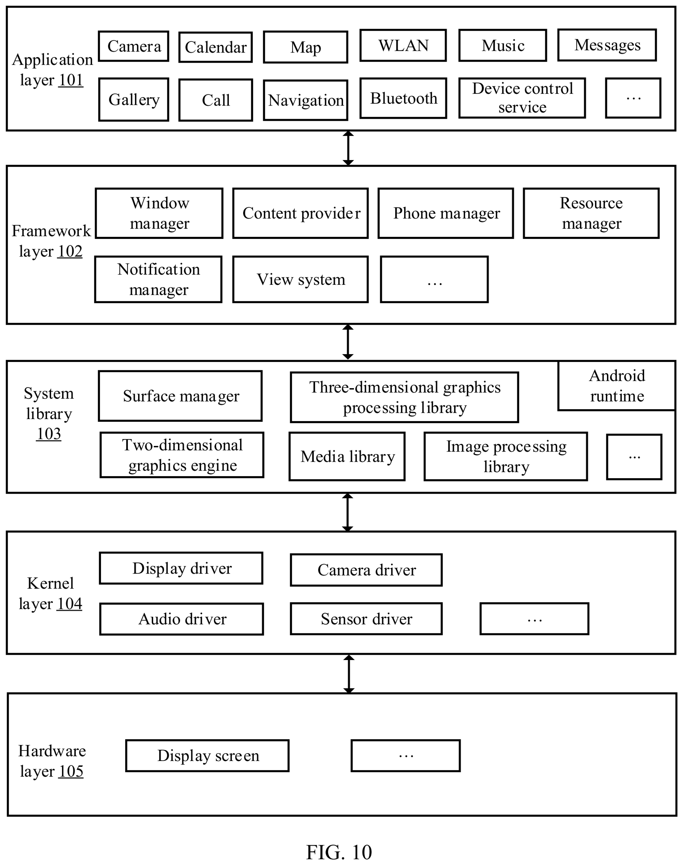

FIG. 10 is a diagram of a software architecture of an electronic device according to an embodiment of this application. In a layered architecture, software is divided into several layers, and each layer has a clear role and task. The layers communicate with each other through software interfaces. The following uses an example in which an operating system installed on an electronic device is an Android system for description. However, this is not limited in this application, and the electronic device may also install another type of operating system.

For example, the Android system is divided into four layers: an application layer 101, a framework layer 102, Android runtime (Android runtime) and system library 103, a kernel layer 104, and a hardware layer 105.

The application layer may include a series of application packages. For example, the application packages may include applications such as Camera, Gallery, Calendar, Call, Map, Navigation, WLAN, Bluetooth, Music, Video, Messages, and a device control service.

The framework layer provides an application programming interface (Application Programming Interface, API) and a programming framework for applications at the application layer. The application framework layer includes some predefined functions. For example, the application framework layer may include a window manager, a content provider, a view system, a phone manager, a resource manager, a notification manager, and the like.

The window manager is used to manage a window program. The window manager may obtain a size of the display screen, determine whether there is a status bar, lock a screen, take a screenshot, and the like. The content provider is configured to store and obtain data, and enable the data to be accessible to an application. The data may include a video, an image, audio, calls that are made and answered, a browsing history and bookmarks, a phone book, and the like. The view system includes visual controls such as a text display control and a picture display control. The view system may be configured to build an application. A display interface may include one or more views. For example, a display interface including an SMS message notification icon may include a view for displaying a text and a view for displaying a picture. The phone manager is configured to provide a communication function of the electronic device, for example, call status management (including answering, hanging up, and the like). The resource manager provides various resources such as a localized character string, an icon, a picture, a layout file, and a video file for an application. The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

The Android Runtime includes a kernel library and a virtual machine. The Android runtime is responsible for scheduling and management of an Android system. The kernel library includes two parts: One part is a functional function that needs to be invoked in a java language, and the other part is a kernel library of Android.

The application layer and the framework layer run on the virtual machine. The virtual machine executes java files at the application layer and the framework layer as binary files. The virtual machine is configured to perform functions such as object lifecycle management, stack management, thread management, security and exception management, and garbage collection.

The system library may include a plurality of functional modules, such as a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications. The media library supports playing and recording in a plurality of common audio and video formats, a still image file, and the like. The media library may support a plurality of audio and video encoding formats, such as MPEG4, H.264, MP3, AAC, AMR, JPG, and PNG. The three-dimensional graphics processing library is configured to implement three-dimensional graphics drawing, image rendering, synthesis, layer processing, and the like. The 2D graphics engine is a drawing engine for 2D graphics drawing.

The kernel layer is a layer between hardware and software. The kernel layer includes at least a display driver, a camera driver, an audio driver, and a sensor driver.

The kernel layer is a core of an operating system of an electronic device, and is first-layer software expansion based on hardware. The kernel layer provides a most basic function of the operating system, is a basis of the operating system, and is responsible for managing a system process, a memory, a device driver, a file, and a network system, and determines performance and stability of the system. For example, a kernel may determine when an application operates on a specific piece of hardware.

The kernel layer includes a program closely related to hardware, such as an interrupt handler and a device driver, further includes a basic and common module with relatively high operating frequency, such as a clock management module and a process scheduling module, and further includes a key data structure. The kernel layer may be disposed in a processor, or may be solidified in an internal memory.

The hardware layer is hardware of the electronic device, and the hardware layer includes at least a display screen.

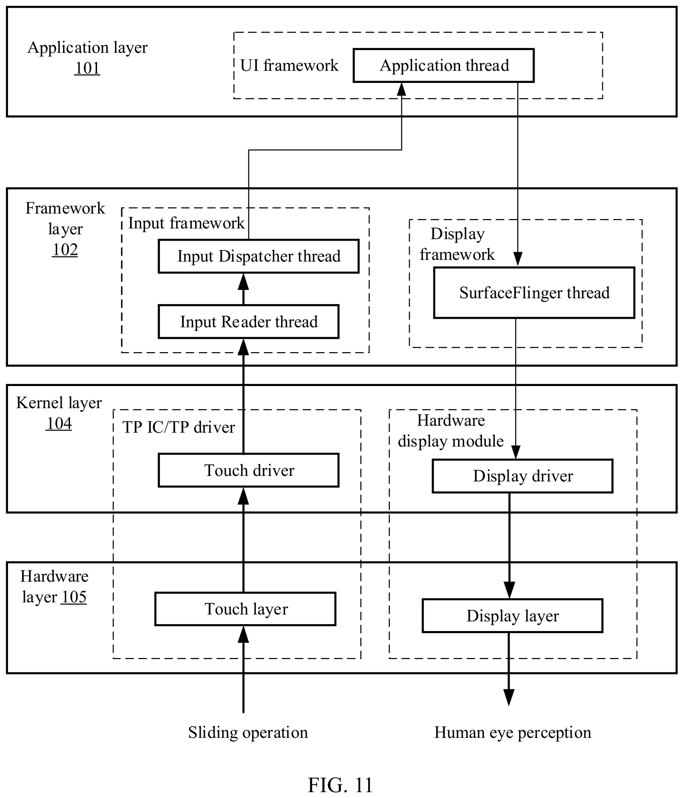

FIG. 11 is a schematic diagram of an application scenario of a display control method according to an embodiment of this application.

It is assumed that the sliding operation of the user acts on the application interface of the first APP. At the hardware layer 105, in response to the sliding operation of the user, a capacitance value change is generated at the touch layer, and the capacitance value change is reported to the touch driver. At the kernel layer 104, the touch driver obtains touch point coordinates and a touch event of the report point based on the capacitance change of the touch layer, and reports the touch point coordinates and the touch event of the report point to the Input Reader thread of the framework layer 102. At the framework layer 102, the Input Reader thread transfers the touch point coordinates and the touch event of the report point to the Input Dispatcher thread, and the Input Dispatcher further transmits the touch point coordinates and the touch event of the report point to the application thread (for example, the thread of the first APP) of the application layer 101. At the application layer 101, the thread of the first APP may determine, based on touch point coordinates and the touch event, whether the sliding operation reaches the sliding response threshold of the first APP, and when the sliding operation reaches the sliding response threshold of the first APP, draw one or more layers, and render the one or more layers. The thread of the first APP may further send the rendered layers to the SurfaceFlinger thread of the framework layer 102. At the framework layer 102, the SurfaceFlinger thread may synthesize the rendered layers to obtain a to-be-displayed image frame, and the SurfaceFlinger thread may further transmit the to-be-displayed image frame to the display driver of the kernel layer 104. At the kernel layer 104, the display driver transmits the to-be-displayed image frame to the display layer for buffering. At the hardware layer 105, the display layer displays the image frame under control of the display drive of the kernel layer. At this moment, the user may see the refreshed application interface of the first APP on the display screen.

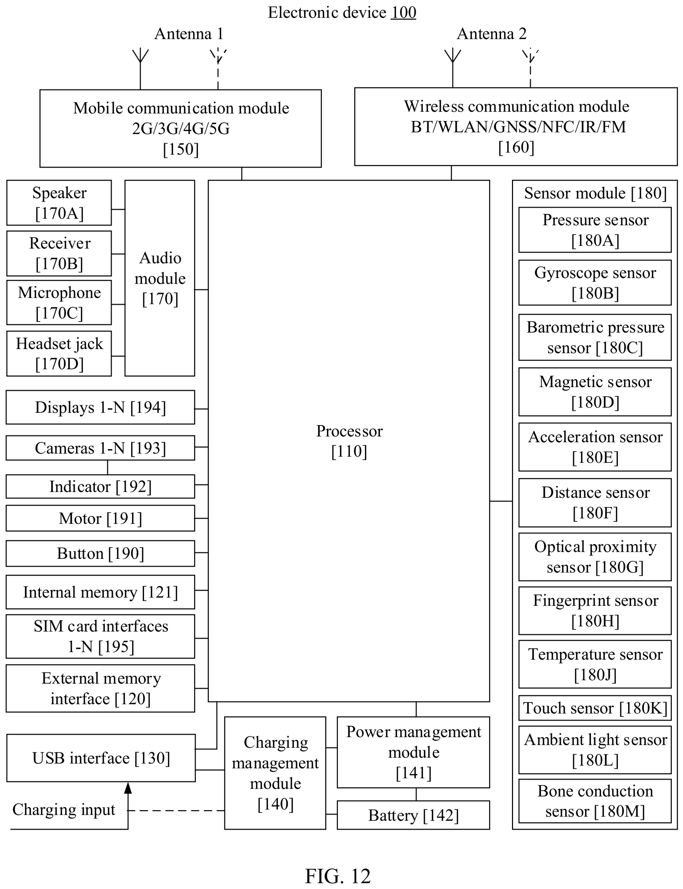

As shown in FIG. 12, the following describes an electronic device 100 in embodiments of this application. The electronic device in embodiments of this application may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or the like that includes a foldable screen. A specific form of the electronic device is not specifically limited in this embodiment of this application. FIG. 12 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The parts shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on instruction operation code and a timing signal, to complete control of instruction fetching and instruction execution.

A storage may be further disposed in the processor 110 to store instructions and data. In some embodiments, the storage in the processor 110 is a cache memory. The memory can store an instruction or data that the processor 110 has just used or used cyclically. If the processor 110 needs to use the instruction or data again, the instruction or data can be directly invoked from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI) interface, a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be coupled to the touch sensor 180K, a charger, a flash light, the camera 193, and the like by using different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 by using the I2S interface, to implement a function of answering a call by using a Bluetooth headset.

The PCM interface may also be used for audio communication, to sample, quantize, and encode an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement a function of answering a call by using a Bluetooth headset. Both the I2S interface and the PCM interface may be used for audio communication.

The UART interface is a universal serial data bus used for asynchronous communication. The bus may be a bidirectional communication bus. The bus converts to-be-transmitted data between Serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through the Bluetooth headset.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display screen 194 by using the DSI interface, to implement a display function of the electronic device 100.

The GPIO interface may be configured by software. The GPIO interface may be configured as a control signal or may be configured as a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to be connected to a charger to charge the electronic device 100, may be configured to transmit data between the electronic device 100 and a peripheral device, or may be configured to be connected to a headset to play audio through the headset. The interface may be further configured to connect to another electronic device 100, such as an AR device.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device 100 by using the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution applied to the electronic device 100 for wireless communication including 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal through an audio device (not limited to the speaker 170A, the receiver 170B, or the like), or displays an image or a video through the display screen 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quas-zenith satellite system, QZSS), and/or a satellite based augmentation system (satellite based augmentation systems, SBAS).

The electronic device 100 may implement a display function through the GPU, the display screen 194, the application processor, and the like. The GPU is a microprocessor for image processing and connects the display screen 194 and the application processor. The GPU is configured to perform mathematical and geometric computing for graphics rendering. The processor 110 may include one or more GPUs, which execute program instructions to generate or change display information.

The display screen 194 is configured to display an image, a video, or the like, The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flexible light-emitting diode, FLED), a Miniled, a MicroLed, a Micro-oled, a quantum dot light emitting diode (quantum dot light emitting diodes, QLED), or the like. In some embodiments, the electronic device 100 may include one or N display screens 194, where N is a positive integer greater than 1. The display screen 194 in this embodiment of this application may be a touch panel. To be specific, the touch sensor 180K is integrated in the display screen 194.

The electronic device 100 may implement a shooting function by using the ISP, the camera 193, the video codec, the GPU, the display screen 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to processing a digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device 100, for example, image recognition, face recognition, voice recognition, and text understanding, may be implemented by using the NPU.

The internal memory 121 may include one or more random access memories (random access memory, RAM) and one or more non-volatile memories (non-volatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, where for example, a fifth generation DDR SDRAM is usually referred to as a DDR5 SDRAM), and the like.

The non-volatile memory may include a magnetic disk storage component and a flash memory (flash memory).

The flash memory may fall into types such as NOR FLASH, NAND FLASH, and 3D NAND FLASH, according to a principle of operation; the flash memory may fall into types such as single-level cell (single-level cell, SLC), multi-level cell (multi-level cell, MLC), triple-level cell (triple-level cell, TLC), and quad-level cell (quad-level cell, QLC), based on a potential quantity of a memory cell; and the flash memory may fall into types such as a universal flash storage (English: universal flash storage, UFS), and Embedded multimedia Cardembedded multimedia card (embedded multi media Card, eMMC) according to a storage specification.

The processor 110 may directly perform reading from or writing into the random access memory. The random access memory may be configured to store an executable program (for example, machine instructions) of an operating system or another running program, and may be further configured to store data of a user and data of an application, and the like.

The non-volatile memory may also store the executable program, the data of the user, and the data of the application, and the like, which may be loaded into the random access memory in advance for directly reading and writing by the processor 110.

The external memory interface 120 may be configured to connect to an external non-volatile memory, to extend a storage capability of the electronic device 100. The external non-volatile memory communicates with the processor 110 by using the external memory interface 120, to implement a data storage function. For example, files such as music and a video are stored in the external non-volatile memory.

The electronic device 100 may implement an audio function such as media data playing or recording by using the audio module 170, the speaker 170A, the telephone receiver 170B, the microphone 170C, the headset jack 170D, and the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110. The speaker 170A, also referred to as a "loudspeaker", is configured to convert an audio electrical signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mic" or "mike", is configured to convert a sound signal into an electrical signal. When making a call or sending voice information, the user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, further recognize a sound source, implement a directional sound recording function, and so on.

The headset jack 170D is configured to be connected to a wired headset. The headset jack 170D may be the USB interface 130, or may be a 3.5 mm open mobile electronic device 100 platform (open mobile terminal platform, OMTP) standard interface or a cellular telecommunications indusattempt association of the USA (cellular telecommunications indusattempt association of the USA, CTIA) standard interface.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device 100 determines intensity of a pressure based on a change of the capacitance. When a touch operation is performed on the display screen 194, the electronic device 100 detects strength of the touch operation based on the pressure sensor 180A. The electronic device 100 may also calculate a touch position based on a detection signal of the pressure sensor 180A. In some embodiments, touch operations performed on a same touch position with different touch strength may correspond to different operation instructions. For example, when a touch operation with touch operation strength less than a first pressure threshold is performed on an SMS application icon, an instruction of viewing an SMS message is executed. When a touch operation with touch operation strength greater than or equal to the first pressure threshold is performed on the SMS application icon, an instruction of creating a new SMS message is executed.

The gyroscope sensor 180B may be configured to determine a motion posture of the electronic device 100. In some embodiments, angular velocities of the electronic device 100 around three axes (namely, an x axis, a y axis, and a z axis) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in scenarios of navigation and a motion sensing game.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening/closing of a flip leather case by using the magnetic sensor 180D. In some embodiments, when the electronic device 100 is a flip phone, the electronic device 100 may detect opening/closing of a flip cover based on the magnetic sensor 180D, and further set features such as automatic unlocking of the flip cover based on a detected opening/closing state of the leather case or a detected opening/closing state of the flip cover.

The acceleration sensor 180E may detect magnitudes of acceleration in various directions (usually on three axes) of the electronic device 100, and may detect a magnitude and a direction of gravity when the electronic device 100 is still. The acceleration sensor 180E may be further configured to recognize a posture of the electronic device 100, and is applied to switching between a landscape mode and a portrait mode, a pedometer, or another application.

The distance sensor 180F is configured to measure a distance. The electronic device 100 may measure a distance in an infrared manner or a laser manner. In some embodiments, in a shooting scenario, the electronic device 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The electronic device 100 emits infrared light to the outside by using the light-emitting diode. The electronic device 100 uses the photodiode to detect reflected infrared light from a nearby object. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may alternatively be used in a leather case mode or a pocket mode to automatically unlock or lock a screen.

The ambient light sensor 180L is configured to sense ambient light brightness. The electronic device 100 may adaptively adjust brightness of the display screen 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket to prevent an unintentional touch.

The fingerprint sensor 180H is configured to collect a fingerprint. The electronic device 100 may implement fingerprint unlocking, application lock accessing, fingerprint-based photographing, fingerprint-based incoming call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor located near the temperature sensor 180J, to reduce power consumption and implement thermal protection. In some other embodiments, when the temperature is less than another threshold, the electronic device 100 heats the battery 142, to prevent the electronic device 100 from being abnormally powered off due to a low temperature. In some other embodiments, when the temperature is less than still another threshold, the electronic device 100 boosts an output voltage of the battery 142, to avoid abnormal power-off due to a low temperature.

A touch sensor 180K is also referred to as a "touch device". The touch sensor 180K may be disposed on the display screen 194. The touch sensor 180K and the display screen 194 form a touch panel, which is also referred to as "touch screen". The touch sensor 180K is configured to detect a touch operation performed on or near the touch sensor. The touch sensor may transmit the detected touch operation to an application processor to determine a type of a touch event. A visual output related to the touch operation may be provided by using the display screen 194. In some other embodiments, the touch sensor 180K may alternatively be disposed on a surface of the electronic device 100, at a location different from that of the display screen 194.

The bone conduction sensor 180M may obtain a vibration signal. In some embodiments, the bone conduction sensor 180M may obtain a vibration signal of a vibration bone in a human vocal-cord part. The bone conduction sensor 180M may alternatively be in contact with a human pulse to receive a blood pressure pulse signal. In some embodiments, the bone conduction sensor 180M may alternatively be disposed in a headset, to form a bone conduction headset in combination with the headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure pulse signal obtained by the bone conduction sensor 180M, to implement a heart rate detection function.

The button 190 includes a power-on/off button, a volume button, or the like. The button 190 may be a mechanical button, or may be a touch button. The electronic device 100 may receive a button input and generate a button signal input related to user settings and function control of the electronic device 100.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playback) may correspond to different vibration feedback effects. The motor 191 may also correspond to different vibration feedback effects for touch operations performed on different areas of the display screen 194. Different application scenarios (for example, a time reminder, information receiving, an alarm clock, and a game) may also correspond to different vibration feedback effects. The touch vibration feedback effect may also be customized.

The indicator 192 may be an indicator light, may be configured to indicate a charging status or a power change, and may be further configured to indicate a message, a missed incoming call, a notification, and the like.

The SIM card interface 195 is configured to be connected to a SIM card. The SIM card may be inserted into the SIM card interface 195 or removed from the SIM card interface 195 to implement contact with and separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or different types. The SIM card interface 195 may also be compatible with SIM cards of different types. The SIM card interface 195 may also be compatible with an external memory card. The electronic device 100 interacts with a network by using the SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

The display control method in the foregoing embodiment may be implemented by the electronic device 100 having the foregoing hardware structure.

An embodiment further provides a computer-readable storage medium. The computer-readable storage medium stores a computer instruction, and when the computer instruction runs on an electronic device 100, the electronic device 100 is enabled to perform the foregoing related method steps to implement the display control method in the foregoing embodiments.

An embodiment further provides a computer program product. When the computer program product runs on a computer, the computer is enabled to perform the foregoing related steps to implement the display control method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the display control method in the foregoing method embodiments.

Through the descriptions of the foregoing implementations, a person skilled in the art may clearly understand that, for the purpose of convenient and brief description, only division of the foregoing functional modules is used as an example for description. In actual application, the functions may be allocated to and completed by different functional modules based on a requirement. In other words, an internal structure of the apparatus is divided into different functional modules, to complete all or some of the functions described above.

In the several embodiments provided in this application, it should be understood that the disclosed apparatus and method may be implemented in another manner. For example, the described apparatus embodiments are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communications connections may be implemented through some interfaces. The indirect couplings or communications connections between the apparatuses or units may be implemented in an electrical form, a mechanical form, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely used to describe the technical solutions of this application, but are not used to limit this application. Although this application is described in detail with reference to the foregoing embodiments, it should be understood by a person of ordinary skill in the art that the technical solutions described in the foregoing embodiments may still be modified, or some technical features thereof are equivalently replaced. These modifications or replacements do not make the essence of the corresponding technical solutions depart from the scope of the technical solutions of the embodiments of this application.

## Claims

1. A display control method, applied to an electronic device, wherein the method comprises:
receiving a first operation of a user;
starting a first application in response to the first operation;
receiving a second operation of the user for the first application, wherein the second operation comprises a sliding operation;
obtaining touch point coordinates and a touch event of the second operation based on a touch sampling rate of the electronic device in response to the second operation;
generating a first vertical synchronization signal based on a screen refresh rate of the electronic device, and generating a second vertical synchronization signal based on the touch event, wherein a frequency of generating the second vertical synchronization signal based on the touch event request is equal to the touch sampling rate; and
performing drawing and rendering of an image frame to be refreshed and displayed in response to either of the first vertical synchronization signal and the second vertical synchronization signal when the second operation reaches a sliding response threshold of the first application.

2. The display control method according to claim 1, wherein the performing drawing and rendering of an image frame to be refreshed and displayed in response to either of the first vertical synchronization signal and the second vertical synchronization signal when the second operation reaches a sliding response threshold of the first application comprises:
in response to either of the first vertical synchronization signal and the second vertical synchronization signal, determining, based on the obtained touch point coordinates, whether the second operation reaches the sliding response threshold of the first application; and
performing drawing and rendering of the image frame to be refreshed and displayed when the second operation reaches the sliding response threshold of the first application.

3. The display control method according to claim 1 or 2, wherein the touch event comprises a first down DOWN event, a move MOVE event, and an up UP event, and the generating a second vertical synchronization signal based on the touch event comprises:
generating the second vertical synchronization signal based on the MOVE event.

4. The display control method according to claim 3, wherein the generating the second vertical synchronization signal based on the MOVE event comprises:
recording a quantity of MOVE events; and
when the quantity of MOVE events is greater than a first preset value, generating the second vertical synchronization signal based on the MOVE event, wherein the first preset value is set based on the sliding response threshold of the first application.

5. The display control method according to claim 3 or 4, wherein the generating the second vertical synchronization signal based on the MOVE event comprises:
generating the second vertical synchronization signal based on the MOVE event when a vertical synchronization signal adding function is in an enabled state.

6. The display control method according to claim 5, wherein the generating the second vertical synchronization signal based on the MOVE event when a vertical synchronization signal adding function is in an enabled state comprises:
generating the second vertical synchronization signal based on the MOVE event when the vertical synchronization signal adding function is in the enabled state and the first application is a preset application.

7. The display control method according to claim 6, wherein the generating the second vertical synchronization signal based on the MOVE event when the vertical synchronization signal adding function is in the enabled state and the first application is a preset application comprises:
when the vertical synchronization signal adding function is in the enabled state and the first application is a preset application, determining whether a moment at which the MOVE event is received meets a generation time condition of the second vertical synchronization signal; and
when the moment at which the MOVE event is received meets the generation time condition of the second vertical synchronization signal, generating the second vertical synchronization signal based on the MOVE event.

8. The display control method according to claim 7, wherein the determining whether a moment at which the MOVE event is received meets a generation time condition of the second vertical synchronization signal comprises:
obtaining a first time difference between the moment at which the MOVE event is received and a moment at which a previous first vertical synchronization signal is generated, and a second time difference between the moment at which the MOVE event is received and a moment at which a next first vertical synchronization signal is to be generated;
determining whether the first time difference is greater than preset duration and whether the second time difference is greater than the preset duration; and
when both the first time difference and the second time difference are greater than the preset duration, determining that the moment at which the MOVE event is received meets the generation time condition of the second vertical synchronization signal.

9. The display control method according to any one of claims 5 to 8, after the generating a second vertical synchronization signal based on the touch event, further comprising:
when it is detected that drawing and rendering of the image frame to be refreshed and displayed are performed, disabling the vertical synchronization signal adding function.

10. The display control method according to any one of claims 5 to 8, after the generating a second vertical synchronization signal based on the touch event, further comprising:
disabling the vertical synchronization signal adding function in response to the UP event.

11. The display control method according to any one of claims 5 to 8, after the generating a second vertical synchronization signal based on the touch event, further comprising:
recording a quantity of MOVE events; and
disabling the vertical synchronization signal adding function when the quantity of MOVE events is greater than a second preset value, wherein the second preset value is set based on the sliding response threshold of the first application.

12. The display control method according to any one of claims 9 to 11, after the performing drawing and rendering of an image frame to be refreshed and displayed, further comprising:
enabling the vertical synchronization signal adding function when a second DOWN event is received.

13. The display control method according to any one of claims 1 to 12, after the performing drawing and rendering of an image frame to be refreshed and displayed, further comprising:
synthesizing and transmitting a rendered image frame for displaying.

14. An electronic device, wherein the electronic device comprises a touch panel, a memory, and a processor;
the touch panel, the memory, and the processor are coupled;
the memory is configured to store program instructions; and
the processor is configured to read the program instructions stored in the memory, to implement the display control method according to any one of claims 1 to 13.

15. A computer-readable storage medium, wherein the computer-readable storage medium stores computer-readable instructions, and when the computer-readable instructions are executed by a processor, the display control method according to any one of claims 1 to 13 is implemented.

16. A chip, coupled to a memory in an electronic device, wherein the chip is configured to control the electronic device to perform the display control method according to any one of claims 1 to 13.
